# EUROPÄISCHE PATENTSCHRIFT

(11) **EP 0 862 967 B1**
(45) Veröffentlichungstag und Bekanntmachung des Hinweises auf die Patenterteilung: **06.08.2003**
(21) Anmeldenummer: 98103932.4
(22) Anmeldetag: 05.03.1998
(51) Int. Cl.: B23P 19/06

(54) **Verschraubungseinrichtung**
Screwing device
Dispositif de vissage

(30) Priorität: 07.03.1997 DE 19709495
(43) Veröffentlichungstag der Anmeldung: 09.09.1998
(73) Patentinhaber: Otto Bihler Handels-Beteiligungs-GmbH, 87642 Halblech (DE)
(72) Erfinder: Bihler, Mathias, 87642 Halblech (DE)
(74) Vertreter: Tiesmeyer, Johannes, Dr.

(56) Entgegenhaltungen:
- EP-A- 0 134 164
- DE-A- 1 403 402
- DE-A- 3 416 344
- DE-A- 3 530 230
- DE-U- 8 703 554
- US-A- 5 549 169
- PATENT ABSTRACTS OF JAPAN vol. 016, no. 416 (M-1304), 2. September 1992 -& JP 04 141332 A (FUJITSU LTD), 14. Mai 1992
- PATENT ABSTRACTS OF JAPAN vol. 018, no. 258 (M-1606), 17. Mai 1994 -& JP 06 039654 A (MATSUSHITA ELECTRIC IND CO LTD), 15. Februar 1994
- PATENT ABSTRACTS OF JAPAN vol. 018, no. 130 (M-1570), 3. März 1994 -& JP 05 318242 A (HITACHI LTD), 3. Dezember 1993
- PATENT ABSTRACTS OF JAPAN vol. 012, no. 169 (M-699), 20. Mai 1988 -& JP 62 282833 A (HITACHI LTD), 8. Dezember 1987

## Beschreibung

Die Erfindung betrifft eine Verschraubungseinrichtung zum Verschrauben von zwei Schraubkomponenten durch relative Drehbewegung und relative Axialbewegung der Schraubkomponenten längs einer Verschraubungsachse, diese Verschraubungseinrichtung umfassend Positionierungsmittel zum Positionieren einer zweiten Schraubkomponente in einer mit einer ersten Schraubkomponente längs der Verschraubungsachse fluchtenden Verschraubungsvorbereitungsstellung und ein Schraubwerkzeug zum Angriff an der zweiten Schraubkomponente, wobei dieses Schraubwerkzeug längs der Verschraubungsachse aus einer den Eingriff des Schraubwerkzeugs mit der zweiten Schraubkomponente bewirkenden Werkzeug-Eingriffsbewirkungsstellung in eine Schraubkomponenten-Eingriffsbewirkungsstellung axial beweglich ist, sofern diese nicht schon bei Erreichen der Werkzeug-Eingriffsbewirkungsstellung erreicht ist, wobei das Schraubwerkzeug nach Bewirkung des Schraubkomponenteneingriffs unter Drehmitnahme der zweiten Schraubkomponente verdrehbar und entsprechend der Verschraubung der Schraubkomponenten weiterhin axial beweglich ist, wobei das Schraubwerkzeug durch eine rotierende Werkzeugtreiber-Baugruppe eines elektrischen Drehantriebs nach einem vorbestimmbaren Drehprogramm drehbar ist, und wobei das Schraubwerkzeug durch axial gefederte Axialankoppelungsmittel an eine axial bewegliche Axialtreiberbaugruppe zur axialen Mitnahme angekoppelt ist und diese Axialtreiberbaugruppe durch einen elektrischen Axialbewegungantrieb mit vorbestimmbarem Axialbewegungsprogramm axial beweglich ist.

Verschraubungseinrichtungen dieser Art sind bekannt, z.B. um Befestigungsschrauben oder Klemmschrauben elektrischer Kontakte zügig in für sie bestimmte Gewindebohrungen einschrauben zu können. Bei bekannten Verschraubungseinrichtungen bedient man sich für das Drehen des Schraubwerkzeugs und für das axiale Bewegen des Schraubwerkzeugs pneumatischer oder elektrischer Antriebe. Bei bekannten Verschraubungseinrichtungen mit einem pneumatischen Axialantrieb ist eine gewisse Nachgiebigkeit in der Axialzustellung gewährleistet, so daß Unstetigkeiten im axialen Vorschub der Schrauben beispielsweise beim Eindringen einer Schrauberklinge in einen Eingriffsschlitz des jeweiligen Schraubenkopfes oder auch Unregelmäßigkeiten im Verschraubungsverlauf der Schraube oder der Gewindebohrung ausgeglichen werden können.

Aus der US-A-5 549 169 ist eine solche Verschraubungseinrichtung bekannt, bei der ein Elektromotor für das axiale Bewegen des Schraubwerkzeugs - und ein weiterer Elektromotor für das Drehen des Schraubwerkzeugs vorgesehen sind. Der für den Drehantrieb des Schraubwerkzeugs vorgesehene Elektromotor ist Teil einer Schrauberbaugruppe, welche insgesamt vermittels einer Federanordnung axial gefedert an der Mutter eines Spindeltriebs angeordnet ist. Die Spindel dieses Spindeltriebs wird von dem Elektromotor rotierend angetrieben, welcher für das axiale Bewegen des Schraubwerkzeugs vorgesehen ist. Bei Drehung der Spindel wird die Spindeltrieb-Mutter linear vorgeschoben bzw. zurückgezogen, um das Schraubwerkzeug entsprechend axial zu bewegen. Da die gesamte Schrauberbaugruppe einschließlich des für das Drehen des Schraubwerkzeugs vorgesehenen Elektromotors und somit eine relativ große Masse bei jedem Schraubvorgang vor- und zurückbewegt werden muss, ist die aus der US-A-5 549 169 bekannte Verschraubungseinrichtung zur Durchführung von schnell aufeinander folgenden Schraubvorgängen nicht sehr gut geeignet.

Zwar hat man mit bekannten Verschraubungseinrichtungen die Leistung (Schraubvorgänge pro Zeiteinheit) gegenüber händischen Verschraubungsvorgängen erheblich erhöhen können, so dass die Leistung daher in den meisten der vorkommenden Anwendungsfälle ausreicht. Schraubvorgänge sind gelegentlich aber an schnell laufenden Montagemaschinen durchzuführen, die beispielsweise mit einem Maschinentakt von 150 pro Minute laufen. In solchen schnell laufenden Bearbeitungsmaschinen haben sich die bisher bekannten Verschraubungseinrichtungen unzureichend erwiesen; sie haben den Maschinentakt begrenzt, so daß die Bearbeitungsvorgänge auf diesen Montagemaschinen durch Schraubvorgänge beschränkt wurden und die mit hohem Investitionsaufwand für größere Produktionsleistungen ausgebauten Montagemaschinen nicht voll ausgefahren werden konnten.

Der Erfindung liegt die Aufgabe zugrunde, eine Verschraubungseinrichtung anzugeben, welche erhöhte Leistungen (Schraubvorgänge pro Zeiteinheit) zuläßt und auf verschiedenste Anforderungen während der Verschraubvorgänge (solche Anforderungen beispielsweise bedingt durch unterschiedliche Schraubformen, unterschiedliche Gewinde, unterschiedliche Eingriffsformationen) flexibel reagieren kann.

Zur Lösung dieser Aufgabe wird erfindungsgemäß vorgeschlagen, dass das Schraubwerkzeug längs der Verschraubungsachse aus einer das Einführen der zweiten Schraubkomponente in die Verschraubungsvorbereitungsstellung gestattenden Werkzeug-Rückzugsstellung in die Werkzeug-Eingriffsbewirkungsstellung axial beweglich ist, dass ferner die rotierende Werkzeugtreiber-Baugruppe in einer Pinole drehbar gelagert - und vermittels einer axial verschiebbaren Drehverbindung mit einem Läuferteil eines axial feststehenden, rotierenden elektrischen Drehantriebsmotors des elektrischen Drehantriebs gekoppelt ist, wobei die Pinole in einer Pinolenführung axial verschiebbar gelagert ist und wobei die Pinole als Teil der Axialtreiberbaugruppe durch den elektrischen Axialbewegungsantriebs axial in der Pinolenführung verschiebbar ist.

Die erfindungsgemäße Lösung bietet insbesondere den Vorteil, dass die Axialbewegungen des Schraubwerkzeugs mit hoher Geschwindigkeit und in schneller Folge vorgenommen werden können, da die durch den Axialantrieb zu bewegende Masse relativ klein ist, zumal der elektrische Drehantriebsmotor an den Axialbewegungen der Pinole und des mit der Pinole axial bewegten Schraubwerkzeugs nicht teilnehmen muss.

Da das Schraubwerkzeug durch axial gefederte Axialankoppelungssmittel an die axial bewegliche Axialtreiberbaugruppe zur axialen Mitnahme angekoppelt ist, ergeben sich Vorteile, insbesondere im Hinblick auf den raschen Zeitablauf eines Verschraubungsvorgangs und damit im Hinblick auf die Leistung der Verschraubungseinrichtung. Man kann dann nämlich die Axialtreiberbaugruppe mit großer Annäherungsgeschwindigkeit an die kritischen Positionen heranfahren lassen, insbesondere an die Werkzeug-Eingriffsbewirkungsstellung oder/und an die Schraubkomponenten-Eingriffsbewirkungsstellung, ohne daß beim jeweiligen Eingriffsbeginn erhebliche Massen ruckartig abgebremst werden müssen. Dank der axial gefederten Axialankopplungsmittel kann man vielmehr die Axialtreiberbaugruppe über die der jeweiligen kritischen Stellung (Werkzeug-Eingriffsbewirkungsstellung und Schraubkomponenten-Eingriffsbewirkungsstellung) entsprechenden Stellungen überschwingen lassen und das Überschwingen durch die axial gefederten Axialankopplungsmittel auffangen.

Bei der erfindungsgemäßen Verschraubungseinrichtung kann die an der jeweils kritischen Stelle ruckartig abzubremsende Masse sehr klein gehalten werden und beschränkt werden auf die axial gefederten Axialankopplungsmittel und das Schraubwerkzeug selbst. Die Masse dieser Axialankopplungsmittel und des Schraubwerkzeugs kann insbesondere klein gehalten werden im Vergleich zur Masse der durch den elektrischen Antrieb bewegten Axialtreiberbaugruppe.

Die Voraussetzungen für schnelles Schrauben und für Variation der Arbeitsabläufe nach Bedarf sind umso besser, je schneller die zur Anwendung kommenden elektrischen Antriebe auf die ihnen zugeführten Steuerungsbefehle reagieren und je genauer Ortsbefehle und Drehzahlbefehle ausgeführt werden können.

Es gibt marktgängige Elektromotoren, welche dieser Forderung genügen. Es handelt sich in der Regel um sogenannte AC-Servo-Motoren. Beispielsweise können AC-Servo-Motoren mit Programmsteuerung eingesetzt werden, welche von der Firma Eduart Bautz GmbH, Robert-Bosch-Straße 10, D-64331 Weiterstadt, angeboten werden, beispielsweise unter der Bestellnummerreihe M 256 B.

Der elektrische Axialbewegungsantrieb umfaßt gemäß einer Weiterbildung der Erfindung einen rotierenden elektrischen Axialbewegungsmotor, wobei ein Läuferteil des rotierenden elektrischen Axialbewegungsmotors über ein Bewegungsumwandlungsgetriebe mit der Pinole in Antriebsverbindung steht.

Das Bewegungsumwandlungsgetriebe kann von einer Schnecken-Schneckenrad-Paarung an dem Läuferteil des rotierenden elektrischen Axialbewegungsmotors und einer Zahnrad-Zahnstangen-Paarung an der Pinole gebildet sein. Diese Gestaltung hat den wesentlichen Vorteil, daß die beiden Elektromotoren für den Axialbewegungsantrieb und für den Drehantrieb auf größte Nähe angenähert werden können und der verbleibende Achsabstand zur Unterbringung des quer verlaufenden Bewegungsumwandlungsgetriebes herangezogen werden kann.

Um verschiedene Verschraubungsaufgaben lösen zu können, wird es in der Regel notwendig sein, gewisse Teile der Verschraubungseinrichtung auszutauschen, insbesondere natürlich die Schraubklinge. Es kann darüberhinaus auch notwendig sein, die Aufnahmen für die jeweilige Schraubklinge und unter Umständen die Axialankopplungsmittel auszutauschen, letztere beispielsweise um je nach Art des Eingriffs zwischen Schrauberklinge und Schraube die durch die Axialankopplungseinheit übertragbare Axialkraft zu variieren. Aus diesem Grunde wird vorgeschlagen, daß die rotierende Werkzeugtreiber-Baugruppe eine austauschbare Baueinheit umfaßt, welche das Schraubwerkzeug und die axial gefederten Axialankopplungsmittel einschließt.

Da andererseits das Schraubwerkzeug selbst sehr viel häufiger ausgetauscht werden muß als die übrigen Teile der vorstehend genannten Baueinheit, insbesondere weil sich ja das Schraubwerkzeug an der Eingriffsstelle mit der zweiten Schraubkomponente abnutzt, wird weiter vorgeschlagen, daß das Schraubwerkzeug in der Baueinheit lösbar aufgenommen ist, so daß bei Abnutzung des Schraubwerkzeugs nur dieses ausgetauscht werden muß, was auf einfache Weise möglich ist.

Die axial gefederten Axialankopplungsmittel können von komprimierbaren Federmitteln gebildet sein. Da in der Regel nur beim Annähern des Schraubwerkzeugs an die zweite Schraubkomponente und beim Annähern der zweiten Schraubkomponente an die erste Schraubkomponente eine axiale Ausgleichsbewegung durch die Axialankopplungsmittel erforderlich ist, genügt häufig für den Aufbau der Axialankopplungsmittel eine einzige Druckfeder.

Die Axialankopplungsmittel können unter Vorspannung stehen. Der Einbau einer Vorspannung hat in der Regel den vorteilhaften Effekt, daß die Veränderung der Federkraft bei eintretender Federverformung reduziert ist.

Für die Axialbewegung der Axialtreiberbaugruppe durch den Axialbewegungsantrieb kann beispielsweise ein vorbestimmter Programmablauf zur Verfügung stehen, welcher umfaßt:
a) eine axiale Annäherungsbewegung der Axialtreiberbaugruppe annähernd entsprechend einer Axialbewegung des Schraubwerkzeugs von der Werkzeug-Rückzugsstellung bis zur Werkzeug-Eingriffsbewirkungsstellung;
b) - soweit noch nötig - eine weitere axiale Annäherungsbewegung der Axialtreiberbaugruppe annähernd entsprechend einem Übergang des Schraubwerkzeugs von der Werkzeug-Eingriffsbewirkungsstellung in die Schraubkomponenten-Eingriffsbewirkungsstellung;
c) eine der Verschraubungsphase zwischen den Schraubkomponenten entsprechende Axialbewegung der Axialtreiberbaugruppe und damit annähernd entsprechend dem Übergang des Schraubwerkzeugs von der Schraubkomponenten-Eingriffsbewirkungsstellung in eine Verschraubungsendstellung;
d) eine Rückzugsbewegung der Axialtreiberbaugruppe annähernd entsprechend dem Übergang des Schraubwerkzeugs von der Verschraubungsendstellung zur Rückzugsstellung des Schraubwerkzeugs.

Die Verwirklichung eines solchen Programmablaufs ist mit handelsüblichen Elektromotoren und zugehörigen Steuerungen, beispielsweise den oben auch nach Bezugsquelle erwähnten Elektromotoren, ohne Schwierigkeit möglich. Wenn ein solches Programm zur Verfügung steht, so kann man das Schraubwerkzeug in der Werkzeug-Eingriffsbewirkungsstellung und in der Schraubkomponenten-Eingriffsbewirkungsstellung genau positionieren, und zwar in Anpassung an die jeweilige Schraube. Man kann in diesen beiden Stellungen dann beispielsweise einen vorübergehenden Stillstand herbeiführen, so daß keine unerwünschten Belastungen an der Eingriffsstelle zwischen Schraubwerkzeug und zweiter Schraubkomponente und an der Eingriffsstelle zwischen zweiter Schraubkomponente und erster Schraubkomponente auftreten. Man kann weiterhin die Verschraubungsendstellung genau positionieren, beispielsweise für folgenden Anwendungsfall: Es soll eine Klemmschraube zum Einklemmen eines elektrischen Anschlußdrahts in eine Gewindebohrung eines Klemmteils eingeschraubt werden. Hier ist es nicht erforderlich, die Schraube bis zu einem Anschlag etwa des Schraubenkopfs an dem Klemmteil einzuschrauben, sondern es kann vorteilhaft sein, die Schraube (zweite Schraubkomponente) in einer Position zum Stillstand zu bringen, die gerade noch das Einlegen eines Anschlußdrahts erlaubt, außerdem aber geringstmöglichen Anzugsweg für das nachfolgende Festlegen des Drahts erfordert.

Man kann weiter die Rückzugsbewegung, abweichend von der Annäherungsbewegung in einem Zug vorgehen lassen.

Bei dem soweit beschriebenen Programmablauf beachte man, daß die schraubende Bewegung des Schraubwerkzeugs sozusagen autonom durch die Überlagerung der Drehbewegung der rotierenden Werkzeugtreiber-Baugruppe und der Axialbewegung der Axialtreiberbaugruppe von den jeweiligen Motoren und der zugeordneten Steuerung erzwungen wird, und zwar so, daß diese Verschraubung dem Gewindeverlauf der beiden Schraubkomponenten entspricht. Sollten in diesem Gewindeverlauf Fehlstellen auftreten, welche Abweichungen gegenüber dem autonom vorgeschriebenen Verlauf der Schraubbewegung des Schraubwerkzeugs zur Folge haben, so können solche Abweichungen durch die axial gefederten Axialankopplungsmittel ausgeglichen werden. Diese axial gefederten Axialankopplungsmittel können insbesondere auch bei Eingriffsbeginn zwischen den beiden Schraubkomponenten auftretende Unregelmäßigkeiten beherrschen.

Es ist nicht zwingend, daß während des Verschraubens der beiden Schraubkomponenten eine laufende Annäherungsbewegung der Axialtreiberbaugruppe stattfindet. Es ist vielmehr auch möglich, mit einem Programmablauf zu arbeiten, welcher umfaßt:
a) eine axiale Annäherungsbewegung der Axialtreiberbaugruppe annähernd entsprechend einer Axialbewegung des Schraubwerkzeugs von der Werkzeug-Rückzugsstellung bis zur Werkzeug-Eingriffsbewirkungsstellung;
b) - soweit noch nötig - eine weitere axiale Annäherungsbewegung der Axialtreiberbaugruppe annähernd entsprechend einem Übergang des Schraubwerkzeugs von der Werkzeug-Eingriffsbewirkungsstellung in die Schraubkomponenten-Eingriffsbewirkungsstellung;
c) eine weitere axiale Annäherungsbewegung der Axialtreiberbaugruppe nach Erreichen der Schraubkomponenten-Eingriffsbewirkungsstellung des Schraubwerkzeugs, diese weitere Annäherungsbewegung mindestens entsprechend der axialen Bewegung des Schraubwerkzeugs während der Verschraubungsphase der Schraubkomponenten, wobei diese weitere axiale Annäherungsbewegung dazu dient, die axial gefederten Axialankoppelungsmittel vorzuspannen bzw. - falls sie schon vorgespannt sind - zusätzlich vorzuspannen,
d) annähernden Stillstand der Axialtreiberbaugruppe während der Verschraubungsphase und
e) eine Rückzugsbewegung der Axialtreiberbaugruppe annähernd entsprechend der Summe der axialen Annäherungsbewegungen gemäß a), c) und gegebenenfalls b).

Man wird allerdings dem erstgenannten Programmverlauf in der Regel den Vorzug geben.

Die Programmabläufe, welcher die erfindungsgemäße Einrichtung fähig ist, erlauben auch Geschwindigkeitsabstimmungen, die zu einer Leistungserhöhung führen können. So ist es möglich, daß für die Axialbewegung der Axialtreiberbaugruppe durch den Axialbewegungsantrieb ein vorbestimmbarer Programmablauf zur Verfügung steht, bei dem die axiale Bewegungsgeschwindigkeit der Axialtreiberbaugruppe während mindestens eines Teils der dem Übergang des Schraubwerkzeugs von der Rückzugsstellung in die Werkzeug-Eingriffsbewirkungsstellung annähernd entsprechenden Annäherungsbewegung der Axialtreiberbaugruppe oder/und die axiale Bewegungsgeschwindigkeit der Axialtreiberbaugruppe während mindestens eines Teils der dem Übergang des Schraubwerkzeugs von der Werkzeug-Eingriffsbewirkungsstellung in die Schraubkomponenten-Eingriffsbewirkungsstellung annähernd entsprechenden Annäherungsbewegung der Axialtreiberbaugruppe größer ist als die axiale Bewegungsgeschwindigkeit der Axialtreiberbaugruppe während der Verschraubungsphase. Bei diesem geschwindigkeitsvariierenden Programmablauf ist man hinsichtlich der Annäherungsbewegungen vor Beginn des eigentlichen Verschraubens und hinsichtlich der Rückzugsgeschwindigkeit nach Beendigung des eigentlichen Verschraubens nicht an die axiale Bewegungsgeschwindigkeit des Schraubwerkzeugs während des Verschraubens gebunden, die aus Gründen eines ungestörten Eingriffsverlaufs in der Regel relativ gering gehalten werden muß. Dadurch, daß man die Axialbewegungsvorgänge außerhalb der eigentlichen Verschraubungsphase schneller ablaufen kann, gewinnt man insgesamt an Leistung.

Es ist weiterhin möglich, daß für die Axialbewegung der Axialtreiberbaugruppe durch den Axialbewegungsantrieb ein vorbestimmbarer Programmablauf zur Verfügung steht, bei dem die axiale Annäherungsgeschwindigkeit der Axialtreiberbaugruppe in einer finalen Teilannäherungsphase des Schraubwerkzeugs an die Schraubwerkzeug-Eingriffsbewirkungsstellung oder/und während einer finalen Teilannäherungsphase des Schraubwerkzeugs an die Schraubkomponenten-Eingriffsbewirkungsstellung kleiner ist als die axiale Bewegungsgeschwindigkeit vor Beginn der jeweiligen finalen Teilannäherungsphase. Durch dieses Programm wird es möglich, die Vorgänge der Schraubwerkzeug-Eingriffsbewirkung und der Schraubkomponenten-Eingriffsbewirkung relativ langsam und damit schonen vorzunehmen, ohne an Leistung zu verlieren.

Es ist weiterhin möglich, daß für die Axialbewegung der Axialtreiberbaugruppe durch den Axialbewegungsantrieb und für die Drehbewegung der rotierenden Werkzeugtreiber-Baugruppe ein Programmablauf zur Verfügung steht, bei dem die Drehzahl der rotierenden Werkzeugtreiber-Baugruppe während einer finalen axialen Teilannäherungsphase des Schraubwerkzeugs an die Werkzeug-Eingriffsbewirkungsstellung oder/und an die Schraubkomponenten-Eingriffsbewirkungsstellung kleiner ist als die Drehzahl während der Verschraubungsphase. Durch diesen Programmablauf kann man während eines Suchvorgangs, während dessen eine rotierende Klinge des Schraubwerkzeugs den Eingang in einen Schraubenkopfschlitz einer Schraube sucht, die Drehzahl der rotierenden Werkzeugtreiber-Baugruppe unter entsprechender Reduzierung der Axialantriebsgeschwindigkeit reduzieren und damit sicherstellen, daß die Klinge des Schraubwerkzeugs ohne Gefahr des Überspringens in den Schlitz einfindet.

Die erfindungsgemäße Verschraubungseinrichtung ist insbesondere auch für solche Verschraubungsvorgänge geeignet, bei denen die Anfangsbedingungen des jeweiligen Verschraubungsvorgangs variieren, weil die Drehwinkelstellung der zweiten Schraubkomponente bei Beginn des Verschraubungsvorgangs nicht definiert ist. In solchen Fällen ergeben sich folgerichtig unterschiedliche Einstellungen am Ende des jeweiligen Verschraubungsvorgangs. Will man oder muß man den nächsten Verschraubungsvorgang jeweils wieder von einer definierten Ausgangsposition des Schraubwerkzeugs und der seinem Antrieb dienenden Baugruppen aus beginnen, so ist es von Vorteil, wenn für die Drehbewegung der rotierenden Werkzeugtreiber-Baugruppe ein Programmablauf zur Verfügung steht, welcher das Anfahren eines Bezugsdrehwinkels gewünschtenfalls beliebiger Winkelabstände gegenüber diesem Bezugsdrehwinkel erlaubt. Andererseits kann man für die Festlegung der Anfangsposition in axialer Richtung durch Vorsehen entsprechender Anschläge Sorge tragen.

Die von den Axialankopplungsmitteln zu übertragende Axialkraft zwischen dem Schraubwerkzeug und der jeweiligen zweiten Schraubkomponente muß in der Regel eine gewisse Mindestgröße haben, um das beim eigentlichen Schraubvorgang erforderliche Drehmoment übertragen zu können. Diese Axialkraft soll während des gesamten Verschraubungsvorgangs im wesentlichen konstant gehalten werden auf einem für den Eingriff zwischen den beiden Schraubkomponenten optimalen Wert. Aus diesem Grund ist es vorteilhaft, wenn die axial gefederten Axialankoppelungsmittel ständig unter solcher Vorspannung stehen, daß während einer im Betriebsablauf auftretenden axialen Verformung der axial gefederten Axialankoppelungsmittel die von diesen ausgeübte Axialkraft annähernd konstant bleibt. Diese Vorgabe erhält besondere Bedeutung für den Fall, daß beim Zusammentreffen der beiden Schraubkomponenten in der Schraubkomponenten-Eingriffsbewirkungsstellung vorab eine Vorspannung in den axial gefederten Axialankopplungsmitteln aufgebaut wird, welche während der nachfolgenden eigentlichen Verschraubungsphase den axialen Vorschub des Schraubwerkzeugs bewirkt. Gerade hier ist es besonders wichtig, daß während des Abbaus der Axialvorspannung im Zuge des eigentlichen Verschraubungsvorgangs die axiale Vorspannkraft im wesentlichen konstant bleibt.

Bei Montagemaschinen und ähnlichen Bearbeitungsmaschinen, zu denen auch übliche Stanz- und Biegemaschinen mit integrierten Verschraubungsvorgängen gehören, kommt es in der Regel auf geringen Raumbedarf der Verschraubungseinrichtungen an. Dies rührt daher, daß bei solchen übergeordneten Maschinen innerhalb eines beschränkten Raums eine Vielzahl von anderen Montagevorgängen oder auch Stanz- und Biegevorgängen mit ihrerseits raumbeanspruchenden Werkzeugen durchgeführt werden müssen. Die Forderung nach kleinem Raumbedarf der Verschraubungseinrichtung läßt sich relativ leicht erfüllen, wenn die Drehachsen der beiden elektrischen Motoren der Motorenbaugruppe annähernd auf engstmöglichen Abstand angenähert sind. Weiterhin besteht bei den Montagemaschinen und ähnlichen Maschinen die Forderung je nach der durchzuführenden Bearbeitungs- und Montageaufgabe unterschiedliche Bearbeitungswerkzeuge, so z.B. auch Verschraubungseinrichtungen, mit geringen Umrüstzeiten anbringen zu können. Aus diesem Grund wird vorgeschlagen, daß der elektrische Axialbewegungsmotor und der elektrische Drehantriebsmotor zu einer betriebsmäßig starren Motorenbaugruppe zusammengefaßt sind, welche gewünschtenfalls gemeinsam an einem Träger, beispielsweise einer übergeordneten Maschine, anbringbar ist.

Montage- und Bearbeitungsmaschinen, auf denen erfindungsgemäße Verschraubungseinrichtungen beispielsweise zum Einsatz kommen können, sind beschrieben in der DE 32 05 493 C2, der DE 40 07 204 A1 und der EP 432 768 A1.

Man kann zur raumsparenden Ausbildung der Verschraubungseinrichtung die Drehachsen der beiden elektrischen Motoren in Parallelstellung zueinander auf engstmöglichen Abstand anbringen, also auf einen Abstand, der annähernd der Summe der Motorradien entspricht, wobei dann dieser Achsabstand ausreichend Platz läßt für die Unterbringung von Getrieben und dgl.

Ein häufiger Anwendungsfall für die erfindungsgemäße Verschraubungseinrichtung ist das Einschrauben von Kopfschrauben mit einfachem diametralem Schrauberangriffsschlitz. Hier kann nur in einer vorbestimmten relativen Drehwinkellage des Schraubwerkzeugs zu der jeweiligen zweiten Schraubkomponente der Drehmitnahmeeingriff herbeigeführt werden. Wenn Winkelüberdeckung zwischen Klinge und Schlitz erreicht ist, so wird der Drehmitnahmeeingriff infolge eines axialen Bewegungssprungs des Schraubwerkzeugs erfolgen. Dies ist bei der erfindungsgemäßen Verschraubungseinrichtung dadurch möglich, daß das Schraubwerkzeug unter Entspannung einer in die axial gefederten Axialankopplungsmittel eingebrachten Vorspannung einen axialen Bewegungssprung ausführt. Dabei sind bei der erfindungsgemäßen Einrichtung wiederum keine großen Massen in axialer Richtung zu bewegen, so daß dieser Bewegungssprung ohne große Verzögerung eintreten kann und deshalb für die Durchführung der Eingriffsherstellung zwischen Schraubwerkzeug und Schlitz kein wesentlicher Zeitverlust eintritt.

Die erfindungsgemäße Verschraubungseinrichtung kann in einer übergeordneten Maschine, insbesondere Montagemaschine, in der Weise angebracht sein, daß Lagermittel für nacheinander zu verschraubende erste Schraubkomponenten durch einen Schrittantrieb relativ zu der Verschraubungseinrichtung fortgeschaltet werden. Es sei an dieser Stelle darauf hingewiesen, daß die axiale Federung der Axialankopplungsmittel auch ersetzt werden kann durch eine Federung der jeweils ersten Schraubkomponenten in den ihnen zugeordneten Lagermitteln.

Die erfindungsgemäße Verschraubungseinrichtung ist grundsätzlich überall dort anwendbar, wo Verschraubungsprobleme zu lösen sind. Dies ist nicht nur bei Montagemaschinen und Werkstückbearbeitungsmaschinen der Fall, bei denen Befestigungsschrauben, Klemmschrauben und dgl. in angepaßte Gewindebohrungen eingeschraubt werden müssen. Beispielsweise besteht dieses Problem auch beim Aufschrauben von Schraubdeckeln an Abfüllmaschinen und dgl. Auch für solche Anwendungsfälle ist die erfindungsgemäße Verschraubungseinrichtung grundsätzlich geeignet.

Dem Ziele einer möglichst raschen Durchführung der Verschraubungsvorgänge dient es auch, wenn der Verschraubungseinrichtung eine Zuführeinrichtung für nacheinander zu verarbeitende zweite Schraubkomponenten zugeordnet ist. Dabei ist es im Hinblick auf die Nachrüstung von übergeordneten Maschinen mit Verschraubungseinrichtungen häufig vorteilhaft, die Zuführeinrichtungen mit den Verschraubungseinrichtungen möglichst weitgehend zu integrieren, um bei der Nachrüstung einer übergeordneten Maschine möglichst nur ein oder möglichst wenige Baugruppen gesondert an der übergeordneten Maschine anbringen zu müssen.

Von besonderer Bedeutung ist es, daß die Zuführeinrichtung für die zweiten Schraubkomponenten eine der Verschraubungsvorbereitungsstellung angrenzende finale Zuführwegstrecke umfaßt, welche in einer zur Verschraubungsachse im wesentlichen orthogonalen Ebene liegt. Diese Anregung steht in bemerkenswertem Gegensatz zu den bekannten Verschraubungseinrichtungen, bei denen man versucht hat, die jeweils zweiten Schraubkomponenten unter spitzem Winkel in die Verschraubungsvorbereitungsstellung im Bereich der Verschraubungsachse zu bringen. Diese spitzwinkelige Zuführung hat sich bei den bekannten Verschraubungsmaschinen hervorragend bewährt insofern, als sie den Vorgang des Zuführens erleichtert und die hierfür eingesetzten mechanischen Baugruppen vereinfacht hat. Es hat sich jedoch folgendes Problem ergeben: Wenn man die zweiten Schraubkomponenten unter spitzem Winkel in die Verschraubungsvorbereitungsstellung einführt, so erfordert dies zwangsläufig, daß das Schraubwerkzeug für die Einführung der jeweiligen zweiten Schraubkomponente in eine weit gegenüber der Verschraubungsvorbereitungsstellung zurückgesetzte Werkzeugrückzugsstellung zurückgezogen ist, um Kollisionen zwischen Schraubwerkzeug der jeweils zuzuführenden zweiten Verschraubungskomponente zu vermeiden. Dies war bei den bekannten Verschraubungseinrichtungen nicht zu beanstanden. Wenn dagegen entsprechend der Aufgabe der hiesigen Verschraubungseinrichtung mit extrem großen Taktzahlen pro Zeiteinheit gerechnet werden muß, so bedeutet Zurückversetzung der Werkzeugrückzugsstellung, daß bei Einleitung eines Verschraubungsvorgangs ein relativ großer Annäherungsweg von dem Schraubwerkzeug durchlaufen werden muß, um das Schraubwerkzeug zum Eingriff mit der zweiten Schraubkomponente zu bringen und danach in Eingriff mit der ersten Schraubkomponente zu bringen. Es hat sich gezeigt, daß das Überwinden dieses Wegs einschließlich der dabei notwendigen Beschleunigung und Verzögerung der Axialtreiberbaugruppe und aller mit ihr zur axialen Bewegung verbundenen Teile eine für die Leistung der Verschraubungseinrichtung (Schraubvorgänge pro Minute) durchaus ins Gewicht fallende Größe bedeutet. Um hier abzuhelfen, wird vorgeschlagen, daß die Zuführeinrichtung für die zweiten Schraubkomponenten eine der Verschraubungsvorbereitungsstellung angrenzende finale Zuführwegstrecke umfaßt, welche in einer zur Verschraubungsachse im wesentlichen orthogonalen Ebene liegt. Bei dieser Ausgestaltung muß die Rückzugstellung des Schraubwerkzeugs nur so weit nach rückwärts versetzt sein, daß die jeweilige Schraubkomponente in ihrem in Annäherungsrichtung rückwärtigsten Teil das Schraubwerkzeug gerade nicht berührt. Es wird deshalb erheblicher Annäherungsweg des Schraubwerkzeugs und der gesamten Axialtreiberbaugruppe eingespart und damit die Ablaufzeit eines Verschraubungsvorgangs verkürzt.

Eine vorteilhafte Ausgestaltung der Zuführeinrichtung besteht darin, daß die Zuführeinrichtung in der finalen Zuführwegstrecke einen Umlaufträger umfaßt, welcher um eine zur Verschraubungsachse im wesentlichen parallele Umlaufachse fortschaltbar ist und eine Mehrzahl von Positionierungsmitteln für zweite Schraubkomponenten umfaßt, wobei diese Positionierungsmittel durch Fortschaltung des Umlaufträgers nacheinander in Flucht mit der Verschraubungsachse bringbar sind. Dabei kann der Umlaufträger beispielsweise ein Drehteller oder Revolverkopf sein.

Die Zusammenwirkung zwischen Schraubwerkzeug und der jeweiligen zweiten Verschraubungskomponente und die Behandlung der zweiten Verschraubungskomponente insgesamt während der Zuführungs- und der Annäherungs- und der Verschraubungsphase muß unter Umständen sehr schonend gestaltet werden, wenn Schraubkomponenten zu verarbeiten sind, die eine aus technischen oder ästhetischen Gründen hochsensible Oberfläche besitzen. Dem kann auch dadurch Rechnung getragen werden, daß die Positionierungsmittel zum Positionieren der zweiten Schraubkomponente in Richtung der Verschraubungsachse verlaufende Durchgänge aufweisen, welche dem Durchtritt der zweiten Verschraubungsmittel einen definierten Widerstand entgegensetzen. Im übrigen ist die erfindungsgemäße Verschraubungseinrichtung für die Bewältigung dieses Problems insgesamt sehr geeignet ist, weil das Schraubwerkzeug durch die Programmierung des Axialannäherungsverlaufs und auch durch die Programmierung des Drehverlaufs bei einer etwaigen Suchbewegung auf äußerste Schonung abgestellt werden kann. Hierfür ist auch die axiale Federung in den Axialankopplungsmitteln mitverantwortlich.

Um eine exakte, aber doch mit geringer Krafteinwirkung überwindbare axiale Positionierung der zweiten Schraubkomponenten zu ermöglichen, wird vorgeschlagen, daß die Durchgänge der Positionierungsmittel wenigstens auf einem Teil der von ihnen gebildeten Durchtrittswege durch in radialer Richtung bezüglich der Verschraubungsachse federnd vorgespannte Durchtrittshemmbacken begrenzt sind, welche unter der Wirkung einer durch das Schraubwerkzeug ausgelösten axialen Annäherungsbewegung der jeweiligen zweiten Schraubkomponente an die jeweilige erste Schraubkomponente auslenkbar sind.

Wenn, wie oben angedeutet, die Zuführrichtung wenigstens teilweise in die Verschraubungseinrichtung integriert sein soll, insbesondere mit ihrem der Verschraubungsachse nahen Teil, um den Anbau an eine übergeordnete Maschine zu erleichtern, so entstehen Schwierigkeiten, wenn für die Zuführeinrichtung oder jedenfalls für deren den Positionierungsmitteln nahen Teil ein zusätzlicher motorischer Antrieb benötigt wird. Aus diesem Grunde ist weiter vorgesehen, daß die Zuführeinrichtung für die zweiten Schraubkomponenten zumindest in einer der Verschraubungsachse nahe liegenden finalen Zuführwegstrecke durch mindestens einen der elektrischen Antriebe - elektrischer Drehantrieb oder/und elektrischer Axialbewegungsantrieb - antreibbar ist. Durch diese Maßnahme wird ein zusätzlicher Antriebsmotor eingespart, weil die Antriebsfunktion für die Zuführeinrichtung einem der bereits vorhandenen Motoren übertragen wird.

Insbesondere dann, wenn eine umlaufende Zuführeinrichtung in der Nähe der Verschraubungsachse vorgesehen ist, erweist es sich als besonders günstig im Hinblick auf die Einbauverhältnisse, wenn mindestens ein der Verschraubungsachse naher Teil der Zuführeinrichtung periodisch mit dem elektrischen Drehantrieb der rotierenden Werkzeugtreiber-Baugruppe kuppelbar ist. Es wird damit auch dem Umstand Rechnung getragen, daß der der Verschraubungsachse nahe Teil der Zuführeinrichtung jeweils dann und nur dann in Bewegung ist, wenn die rotierende Werkzeugtreiber-Baugruppe hinsichtlich der Verschraubung der Schraubkomponenten unwirksam ist, denn es kann ja nur dann eine neue zweite Verschraubungskomponente zugeführt werden, wenn gerade nicht geschraubt wird.

Hat man sich einmal entschlossen, die eigentliche Zuführbewegung der der Verschraubungsachse nahen Teile der Zuführeinrichtung von dem Drehantrieb des Schraubwerkzeugs abzuleiten, dann erweist es sich weiterhin als vorteilhaft, wenn der der Verschraubungsachse nahe Teil der Zuführeinrichtung an den elektrischen Drehantrieb durch eine Kupplungseinrichtung an- bzw. abkuppelbar ist, welche durch den elektrischen Axialbewegungsantrieb betätigbar ist. Eine beispielhafte Lösung besteht für dieses Antriebsprinzip darin, daß die rotierende Werkzeugtreiber-Baugruppe ein erstes Kupplungsrad umfaßt, welches mit einem zweiten Kupplungsrad durch axiale Relativbewegung in und außer Eingriff zu bringen ist, daß das erste Kupplungsrad mit der Axialtreiberbaugruppe zur gemeinsamen axialen Bewegung verbunden ist und daß das zweite Kupplungsrad mit dem der Verschraubungsachse nahen Teil der Zuführeinrichtung in Antriebsverbindung steht. Im Falle einer solchen Ausbildung ergibt sich als vorteilhaft ein Bewegungsablauf dergestalt, daß das erste Kupplungsrad jeweils dann in Kupplungseingriff mit dem zweiten Kupplungsrad steht, wenn die Axialtreiberbaugruppe sich annähernd in einer der Werkzeug-Rückzugsstellung entsprechenden Stellung befindet, auskuppelbar ist, wenn die Axialtreiberbaugruppe eine axiale Annäherungsbewegung entsprechend der Axialbewegung des Schraubwerkzeugs von der Werkzeug-Rückzugsstellung zur Werkzeug-Eingriffsbewirkungsstellung beginnt und wieder einkuppelbar ist, wenn die Axialtreiberbaugruppe die Bewegung entsprechend der Bewegung des Schraubwerkzeugs von einer Verschraubungsendstellung in die Werkzeug-Rückzugsstellung beendet.

Hier erweist es sich nun als notwendig, daß zur Vorbereitung des Ankuppelns des der Verschraubungsachse nahen Teils der Zuführeinrichtung an die rotierende Werkzeugtreiber-Baugruppe die letztere in eine vorbestimmte Winkellage einstellbar ist.

Es ist grundsätzlich denkbar, die gesamte Zuführwegstrecke für die zweiten Schraubkomponenten von einem Schraubkomponentenvorrat bis zu der Verschraubungsvorbereitungsstellung mit einer einzigen Zuführeinrichtung zu bedienen, wie dies in der Technik üblich ist. Von dieser aus Gründen der Einfachheit an sich günstig erscheinenden Lösung nimmt die Erfindung Abstand insofern, als sie vorschlägt, daß die Zuführeinrichtung eine der Verschraubungsachse fernere Zuführwegstrecke aufweist, welche an die der Verschraubungsachse nahe, finale Zuführwegstrecke in einer Übergabeposition anschließt. Es kann dann für die fernere Zuführwegstrecke eine gesonderte Zuführeinrichtung vorgesehen werden. Die im finalen Bereich der Zuführwegstrecke nahe bei der Verschraubungsachse liegende Zuführeinrichtung kann dann in die Verschraubungseinrichtung beispielsweise in Form eines Drehtellers leicht und raumsparend integriert werden. Die dem ferneren Teil der Zuführwegstrecke dienende Zuführeinrichtung kann gesondert hergestellt werden und gesondert an einer übergeordneten Arbeitsmaschine angebaut werden; die Vereinzelung der einzelnen zweiten Schraubkomponenten kann bereits in der ferneren Zuführungseinrichtung erfolgen. Besonders einfach wird die Übergabe dann, wenn die der Verschraubungsachse fernere Zuführwegstrecke einen Zuführkanal für die zweiten Schraubkomponenten aufweist. Der Zuführkanal kann dann nämlich einfach so ausgerichtet sein, daß sein Ende jeweils mit einem Durchgang der Positionierungsmittel fluchtet.

Im Bereich der Zuführeinrichtung kann überdies eine Beobachtungseinrichtung für die durch die Zuführeinrichtung zugeführten zweiten Schraubkomponenten angeordnet sein. Damit hat es folgende Bewandtnis: Die Schraubkomponenten werden in der Regel in billiger Massenfertigung hergestellt und unterliegen keiner strengen Qualitätskontrolle. Im Augenblick der Zuführung sind sie zwar soweit orientiert, daß sie in die Schraubvorrichtung eingeführt werden können. Fehler an den einzelnen Schraubkomponenten sind aber durchaus noch denkbar. Am Eingang der Verschraubungseinrichtung sind die Verschraubungskomponenten, weil für die Aufnahme in der Verschraubungseinrichtung orientiert oder zumindest vororientiert, für eine Materialkontrolle zugänglich, die beispielsweise auf der Verwendung einer oder mehrerer Fernsehkameras beruht, welche die wahrgenommenen Umrisse der jeweiligen Schraubkomponenten mit Soll-Umrissen einer Normkomponente vergleichen können. An dieser Stelle kann deshalb und wird deshalb mit Vorzug eine Überwachung eingerichtet, beispielsweise mittels einer Fernsehkamera. Um bei Ermittelung einer Verschraubungskomponente mit unakzeptablen Fehlern den Ablauf der Verschraubeinrichtung und insbesondere der übergeordneten Maschine nicht insgesamt zwecks Aussonderung abstoppen zu müssen, wird auf den Fehler bevorzugt in der Weise reagiert, daß der Betriebsablauf fortgesetzt wird, die jeweils fehlerhafte Schraubkomponente und die mit ihr im Zuge der weiteren Bearbeitung vereinigte erste Schraubkomponente oder das mit dieser zweiten Schraubkomponente ausgestattete Fertigteil in einem Speicher notiert und später nach dem Ausgang aus der übergeordneten Maschine speichergesteuert ausgesondert wird.

Die Beobachtungseinrichtung wird bevorzugt im Verlauf einer der Verschraubungsachse nahen Zuführwegstrecke angeordnet. Insbesondere bietet sich für die Anordnung der Beobachtungseinrichtung ein Ort an, an welchem die jeweiligen auf einem Umlaufträger montierten Positionierungsmittel zwischen dem Ort der Aufgabe der zweiten Verschraubungskomponente und dem durch die Verschraubungsachse definierten Verschraubungsvorbereitungsort im Zuge der Fortschaltbewegung des Umlaufträgers zum Stillstand kommt.

Die beiliegenden Figuren erläutern die Erfindung anhand von Ausführungsbeispielen. Es stellen dar:
- Fig. 1: eine Seitenansicht, teilweise im Schnitt einer ersten Verschraubungseinrichtung nach der Erfindung;
- Fig. 2: eine weitere Seitenansicht, teilweise im Schnitt in Pfeilrichtung II der Fig. 1;
- Fig. 3: wiederum eine Ansicht in Pfeilrichtung II der Fig. 1, jedoch an anderen Stellen geschnitten;
- Fig. 4: einen Schnitt nach Linie IV-IV der Fig. 1;
- Fig. 5: einen Schnitt nach Linie V-V der Fig. 1;
- Fig. 6: ein Detail einer Positionierungseinrichtung für die durch das Schraubwerkzeug zu erfassenden zweiten Schraubkomponenten als Vergrößerung des Bereichs A in Fig. 1;
- Fig. 7: ein bevorzugtes Betriebsablaufprogramm für die Verschraubungseinrichtung nach Fig. 1 - 6 als Teil einer übergeordneten Montagemaschine;
- Fig. 8: eine erfindungsgemäße Schraubeinrichtung, angebaut an einer übergeordneten Montagemaschine im Schema,
- Fig. 8a: das Produkt eines Verschraubungsvorgangs, der mit der erfindungsgemäßen Verschraubungseinrichtung nach Fig. 1 - 8 hergestellt wurde, und
- Fig. 9: einen Schnitt entsprechend dem Schnitt nach Fig. 1 mit einer Abwandlung der Axialankopplungsmittel für die Durchführung eines abgewandelten Betriebsablaufsprogramms.

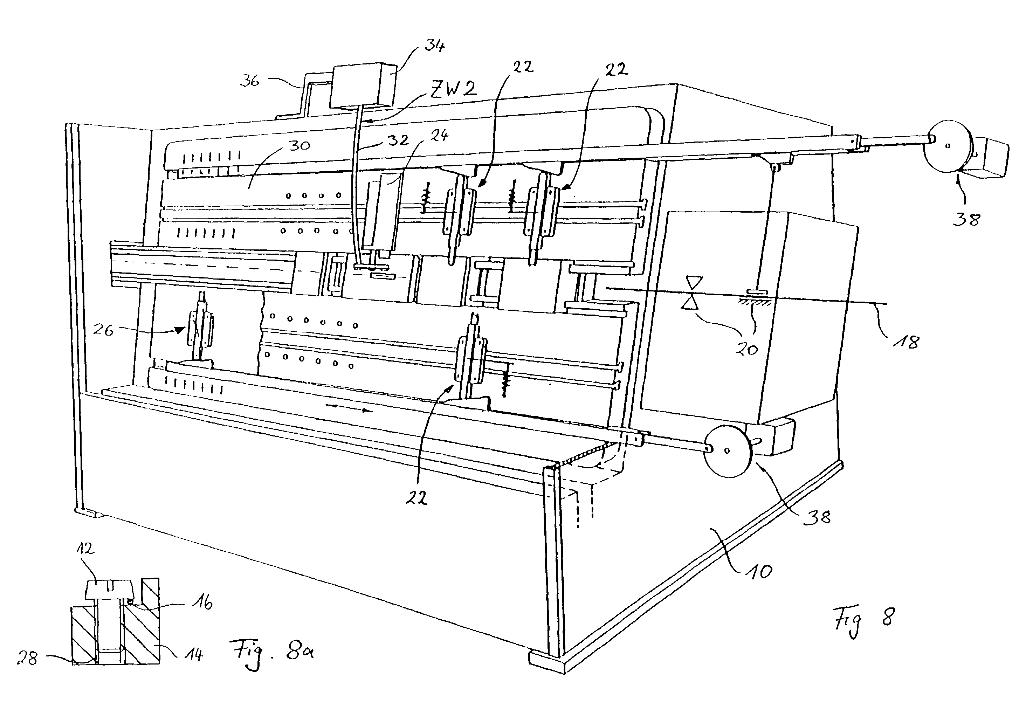

In Fig. 8 ist eine Montagemaschine 10 dargestellt, welche beispielsweise dazu bestimmt ist, um Schrauben 12 in Klemmkörper 14 gemäß Fig. 8a einzuschrauben, in denen später durch Nachverschraubung ein elektrischer Leiter 16 eingeklemmt werden soll.

Bei der in der Fig. 8 dargestellten Montagemaschine, handelt es sich um eine Maschine, wie sie beispielsweise in der DE 40 07 204 A1 in allen Einzelheiten dargestellt und beschrieben ist. In dieser Maschine wird beispielsweise wie folgt gearbeitet:

Ein Blechband 18 wird mittels einer Bandzuführeinrichtung zugeführt und durch Biege-, Stanz-, Loch- und Gewindebohrwerkzeuge 22 zu Formstücken 14 verabeitet. Durch eine Verschraubungseinrichtung 24 werden sodann die Schrauben 12 in die Klemmkörper 14 eingeschraubt. In einer Trenneinrichtung 26 werden schließlich die einzelnen Klemmeinrichtungen 14 von dem Band 18 abgetrennt und vereinzelt.

Man kann die Klemmkörper 14 mit ihren Gewindebohrungen 28 als erste Schraubkomponenten und die Schrauben 12 als zweite Schraubkomponenten verstehen.

Die Verschraubungseinrichtung 24 ist als vormontierte Einheit an einer Werkzeugplatte 30 der Montagemaschine 10 befestigt und kann bei Bedarf angebaut oder gelöst werden. Durch ein Rohr 32 werden die Schrauben 12 einzeln der Reihe nach zugeführt; sie kommen von einer Schraubenversorgungseinheit 34, in welcher die Schrauben zunächst ungeordnet aufgenommen sind und sodann geordnet und zum Zuführen in die Verschraubungseinrichtung 24 orientiert werden. Die Schraubenversorgungseinrichtung 34 ist durch einen Träger 36 an der Montagemaschine 10 angebaut.

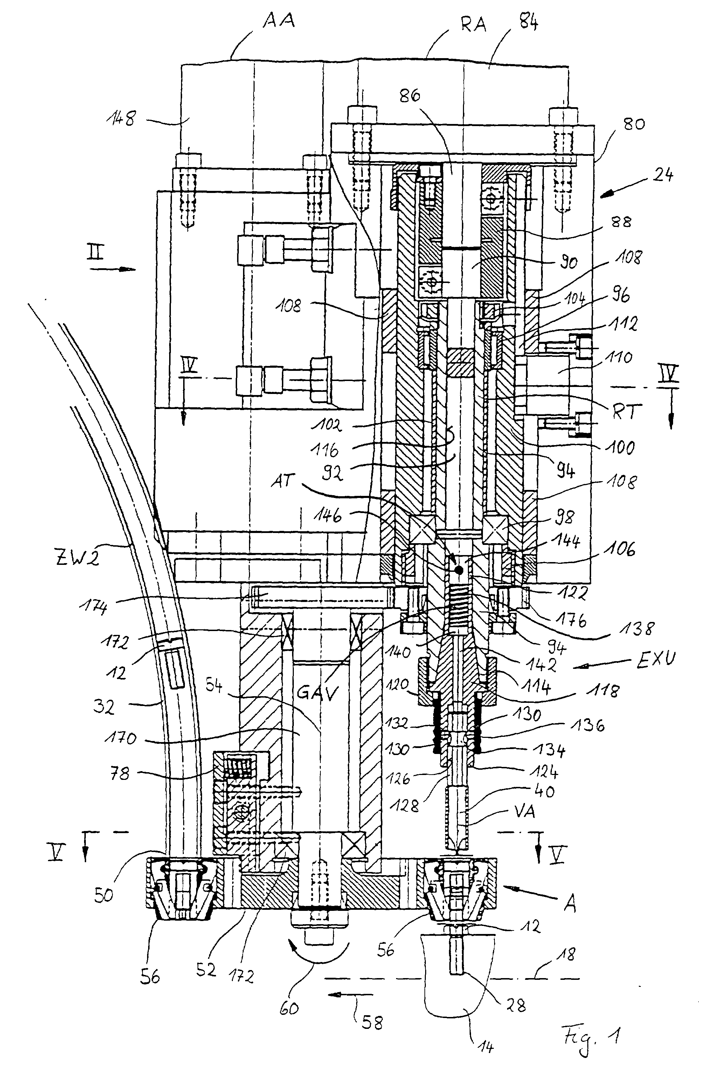

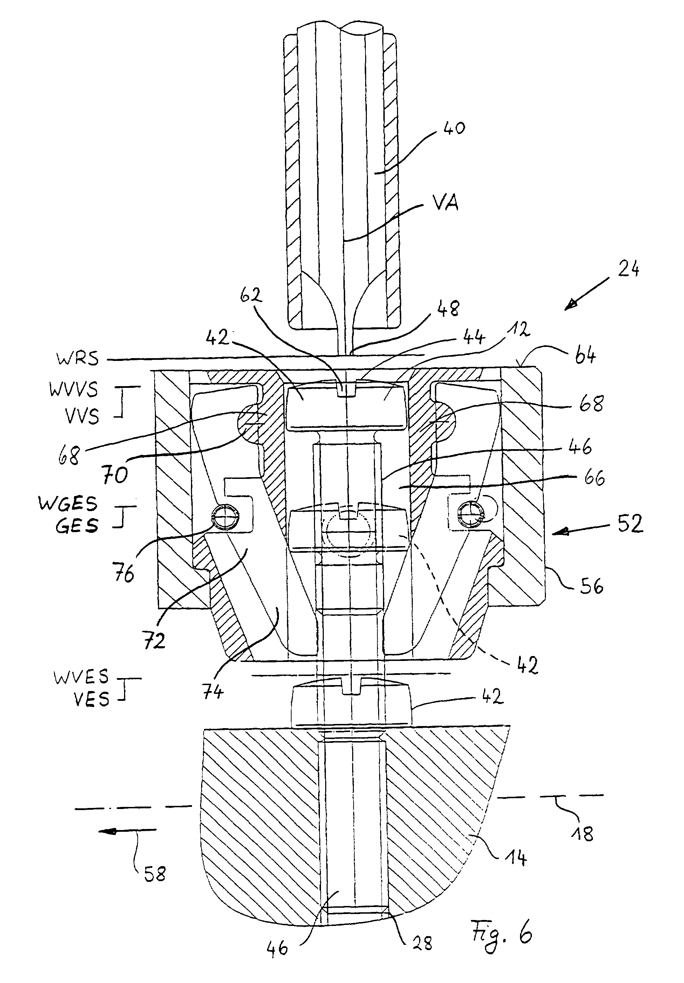

In den Fig. 1 - 6 erkennt man Einzelheiten der Verschraubungseinrichtung 24, wobei Fig. 6 die Details am unteren Ende der Verschraubungseinrichtung 24 von Fig. 1 darstellt, dort wo in Fig. 1 das Bezugszeichen A erscheint.

Die Klemmkörper 14 gelangen gemäß Fig. 1 als Teile des Bandes 18 oder als bereits vereinzelte Teile, die auch außerhalb der Montagemaschine 10 hergestellt worden sein können und im Maschinentakt der Montagemaschine 10 zugeführt werden können, in den Bereich der Verschraubungseinrichtung 24. Die Klemmkörper 14 erreichen die Verschraubungseinrichtung 24 im Arbeitstakt der Bearbeitungsmaschine gemäß Fig. 8, welcher durch die Umdrehungszahl der Antriebseinrichtungen bestimmt ist. In jedem Arbeitstakt, d. h. bei jeweils einem Umlauf der Antriebseinrichtungen 38, muß eine Schraube 12 mit einem Klemmkörper 14 verschraubt werden. Je schneller der Umlauf der Antriebseinrichtungen 38 ist, umso weniger Zeit steht für das Einschrauben der Schrauben 12 in die Klemmkörper 14 zur Verfügung. Dabei ist auch zu bedenken, daß für das Einschrauben der Schrauben in die Klemmkörper 14 nicht die ganze "Taktzeit", also nicht die ganze Umlaufzeit der Antriebseinrichtungen 38 verfügbar ist, sondern jeweils nur ein Bruchteil dieser Taktzeit: Ein wesentlicher Teil der Taktzeit wird nämlich für den Transport der Klemmkörper 14 in den Bereich der Verschraubungseinrichtung 24 benötigt und für den Weitertransport der mit Schrauben 12 versehenen Klemmkörper 14 aus dem Bereich der Verschraubungseinrichtung 24 in Richtung auf die Trenneinrichtung 26. Es steht also von der Umlaufzeit der Antriebseinrichtungen 38 nur ein Bruchteil für die Verschraubung zur Verfügung, währenddessen der Klemmkörper 14 gegenüber der Verschraubungseinrichtung 24 stillsteht. In Fig. 1 ist ein Zustand gezeichnet, in welchem ein Klemmkörper 24 mit seiner Gewindebohrung 28 gegenüber der Verschraubungseinrichtung 24 stillsteht, wobei sich die Gewindebohrung 28 des Klemmkörpers 14 in Flucht mit der Verschraubungsachse VA eines Schraubwerkzeugs 40 befindet. Die einzelnen Schrauben 12 werden durch das Rohr 32 im Arbeitstakt zugeführt, so daß jeweils dann, wenn ein Klemmkörper 14 die in Fig. 1 und 6 dargestellte Verschraubungsbereitschaftsstellung einnimmt, eine zugehörige Schraube 12 sich in Verschraubungsvorbereitungsstellung gemäß Fig. 6 befindet.

In Fig. 6 ist die Schraube 12 mit ihrem Schraubenkopf dreifach dargestellt. Die einzelnen Stellungen, die mit VVS, GES und VES bezeichnet sind, sind jeweils gekennzeichnet durch die Lage des Scheitels 44 des Schraubenkopfs 42. VVS bedeutet die Verschraubungsvorbereitungsstellung der Schraube 12, GES bedeutet die Gewindeeinfaßstellung der Schraube 12, d. h. diejenige Stellung, in welcher das untere Ende des Schraubenschafts 46 zur Anlage an den oberen Ausgang der Gewindebohrung 28 kommt, und VES bedeutet diejenige Stellung der Schraube 12, in welcher der Schraubvorgang der Schraube 12 gegenüber der Gewindebohrung 28 abgeschlossen ist. In Fig. 6 befindet sich das Schraubwerkzeug 40 in seiner Werkzeugrückzugsstellung; diese Werkzeugrückzugsstellung ist durch die Linie WRS angedeutet, auf welcher sich die Klinge 48 des Schraubwerkzeugs 40 in der Werkzeugrückzugsstellung befindet.

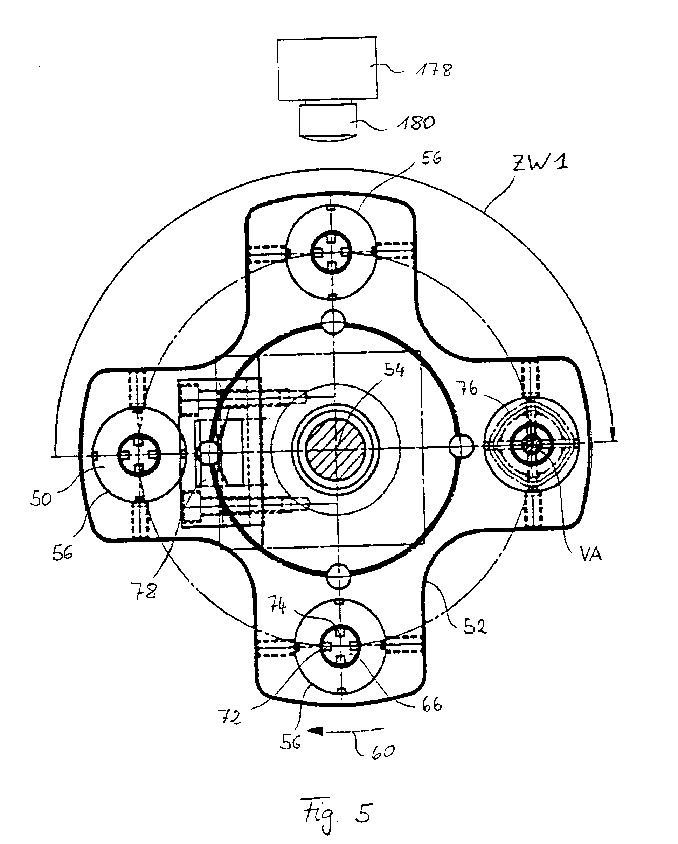

In dem in Fig. 6 dargestellten Zustand kann die Schraube 12 in die Verschraubungsvorbereitungsstellung VVS gebracht werden. Dies ergibt sich aus Fig. 1. In Fig. 1 endet das Rohr 32 in einer Übergabestellung 50 frei über einem Drehteller 52, der an der Verschraubungseinrichtung 24 um eine Tellerdrehachse 54 schrittweise drehbar gelagert ist. Der Drehteller 52 hat, wie in Fig. 5 dargestellt, insgesamt vier Nester 56, welche als Positionierungsmittel für die Schrauben zu verstehen sind und sich als Durchgänge verstehen, auf welche bei der Detailbeschreibung der Fig. 6 noch einzugehen sein wird.

Wenn ein Nest der insgesamt vier Nester, wie in Fig. 1 dargestellt, sich in Flucht mit der Verschraubungsachse VA befindet, so befindet sich ein diametral gegenüberliegendes Nest 56 in der Übergabestellung 50, so daß dort, während die in der Verschraubungsachse VA befindliche Schraube 12 bis in die Verschraubungsendstellung VES gebracht wird, eine weitere Schraube 12 durch das Rohr 32 in das diametral gegenüberliegende Nest 56 eingesetzt wird, und zwar jeweils in die Stellung, die in Fig. 6 mit VVS bezeichnet ist.

Wenn die Einschraubung im Bereich der Verschraubungsachse VA beendet ist, d. h. wenn die Schraube 12 in Fig. 6 die durch VES gekennzeichnete Position erreicht hat, wird das Blechband 18 und mit ihm der Klemmkörper 14 in Pfeilrichtung 58 fortgeschaltet. Gleichzeitig führt der Schaltteller 52 eine 90°-Drehung in Pfeilrichtung 60 aus, so daß das in Fig. 5 obenliegende Nest 56 (in Fig. 1 verdeckt) mit der von ihm während der vorletzten Beschickung durch das Rohr 32 aufgenommenen Schraube in den Bereich der Verschraubungsachse VA gelangt und das soeben beschickte Nest 56 in die Position des in Fig. 5 obenliegenden Nests gelangt.

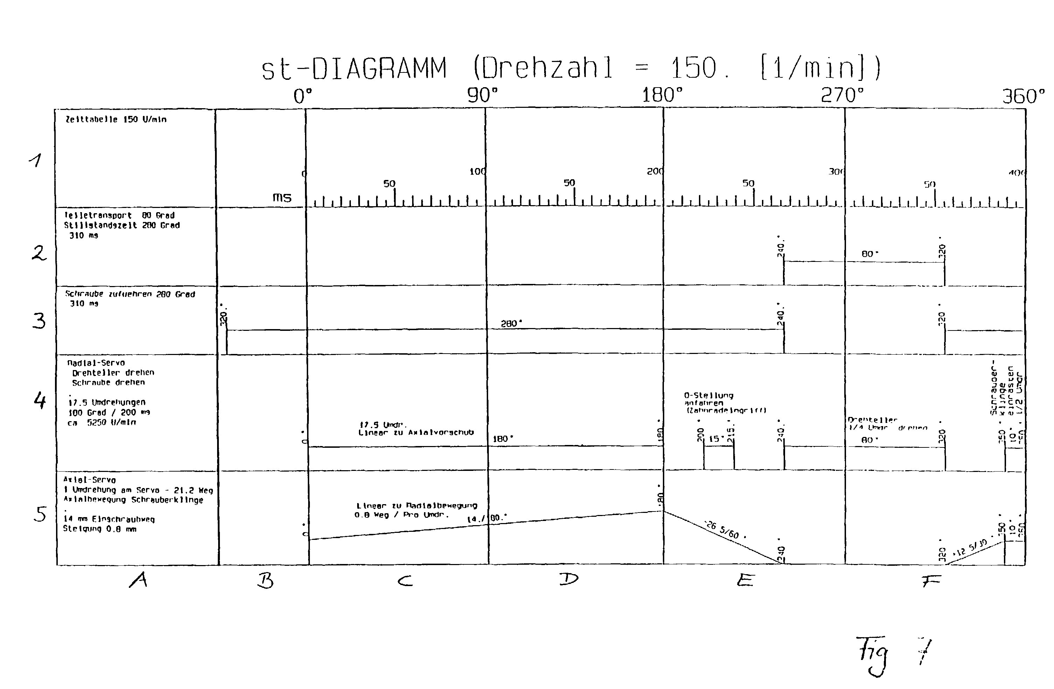

Der Arbeitsablauf der Verschraubungseinrichtung im Rahmen des Arbeitsablaufs der Montagemaschine 10 ist in dem ST-Diagramm gemäß Fig. 7 dargestellt. ST-Diagramm bedeutet dabei Weg (S - Zeit, T - Diagramm), weil wesentliche Ablaufphasen durch eine Wegzurücklegung in Abhängigkeit von der Zeit gekennzeichnet sind. In dem ST-Diagramm sind zur besseren Erläuterung einzelne Zeilen mit 1 - 5 und einzelne Spalten mit A - F bezeichnet. Es können dann im folgenden einzelne Planquadrate, z.B. Planquadrat 3B, bezeichnet werden.

Das ST-Diagramm beruht auf der Annahme einer Drehzahl der Maschine, also der Antriebseinrichtungen 38 in Fig. 8 von 150 U/min. Dies entspricht einer Taktzeit von 400 Millisekunden. Diese 400 Millisekunden sind in der Spalte 1 in Zuordnung zu dem "Maschinenwinkel" der Montagemaschine 10 eingezeichnet. Dabei ist für die Darstellung der Nullpunkt so gewählt, daß die Taktzeit (null Millisekunden) entsprechend 0° Maschinenwinkeleinstellung dann beginnt, wenn die eigentliche Verschraubung beginnt, d. h. wenn das Schaftende des Schraubenschafts 46 in das obere Ende der Gewindebohrung 28 eingefaßt hat, entsprechend der Position GES in Fig. 6, und wenn überdies die Schraubenklinge 48 in den Eingriffsschlitz 62 des Schraubenkopfs 42 eingefaßt hat, so daß mit gleichbleibender Relation von Drehzahl der Schraube und axialer Vorschubgeschwindigkeit des Schraubwerkzeugs 40 der Übergang von der Schraubenposition GES zur Schraubenposition VES durchgeführt werden kann.

In Zeile 4 ist durch die horizontale Linie in den Planquadraten 4B und 4C eine gleichbleibende Drehbewegung (vorzugsweise konstante Drehzahl) des Schraubwerkzeugs durch eine horizontale Line dargestellt, wobei angenommen wird, daß diese Drehbewegung mit einer Drehzahl von ca. 5250 Umdrehungen pro Minute während eines Maschinenwinkels der Montagemaschine (Maschinenwinkel an den Antriebseinrichtungen 38 der Fig. 8) während einer Partialtaktzeit von 200 Millisekunden erfolgt und daß während dieser 200 Millisekunden das Schraubwerkzeug 40 und damit die Schraube 12 insgesamt 17,5 Umdrehungen ausführen. Zu diesen Daten wird auch auf die Legenden des Planquadrats 4A verwiesen. Die in den Planquadraten 4C - 4D dargestellte Drehbewegung des Schraubwerkzeugs 40 entspricht einer axialen Vorschubbewegung des Schraubwerkzeugs 40, die in den Planquadraten 5C und 5D dargestellt ist. Die in diesen Planquadraten dargestellte, leicht ansteigende Linie entspricht der Axialannäherung der Schraube 12 von der Stellung GES bis in die Stellung VES während der Verschraubung. Anders ausgedrückt kann man auch sagen, daß diese Linie in den Planquadraten 5C und 5D dem Vorschub des Schraubwerkzeugs 40 während der Verschraubungsphase entspricht. In der Zeile 2 findet sich in den Planquadraten 2C und 2D kein Eintrag. Dadurch ist zum Ausdruck gebracht, daß während der Verschraubungsphase entsprechend den Planquadraten 4C, 4D und 5C, 5D der Transport des Blechbandes 18 ruht, d.h. der Klemmkörper 14 gemäß Fig. 1 und 6 die Position in der Verschraubungsachse VA einnimmt.

Weiterhin ist in der Zeile 3 des ST-Diagramms durch die horizontale Linie, die sich u.a. auch durch die Planquadrate 3C und 3D erstreckt, angedeutet, daß Zeit von 200 Millisekunden, entsprechend 180°, für die Schraubenzuführung durch das Rohr. 32 zur Verfügung steht (Anmerkung: Es stehen noch zusätzliche Zeiten in den Planquadraten 3B und 3E für diese Zuführung zur Verfügung, auf die noch eingegangen wird). Hierzu wird auf die Legende in 3A zusätzlich verwiesen. Man bedenke: Während der eigentlichen Verschraubungsphase entsprechend den Planquadraten 4C, 4D und 5C, 5D muß die gerade zu verschraubende Schraube 12 in der Verschraubungsachse VA verbleiben. Der Drehteller 52 kann also nicht drehen. Deshalb kann in diesem Zeitraum eine weitere Schraube 12, wie in Fig. 1 dargestellt, durch das Rohr 32 in das gemäß Fig. 5 jeweils links liegende Nest 56 eingeführt werden.

Wenn die eigentliche Verschraubungsphase beendet ist, d. h. wenn in den Zeilen 4 und 5 jeweils das Ende der Planquadrate 4D und 5D erreicht ist, so ist die Schraube 12 soweit vollständig in den Klemmkörper 14 eingeschraubt, als dies beabsichtigt ist. Das Schraubwerkzeug 40 kann dann wieder zurückgezogen werden. Diese Rückzugsbewegung ist in der Zeile 5, und zwar dort in dem Planquadrat 5E dargestellt. Die Rückzugsbewegung des Schraubwerkzeugs 40 erfolgt während einer Zeit von ca. 67 Millisekunden, entsprechend einem Maschinenwinkel der Antriebsvorrichtungen 38 von ca. 60°. Der Rückhub beträgt beispielsweise 26,5 mm, entsprechend dem Ordinatenwert der geneigten Linie im Planquadrat 5E. Nach Durchlaufen dieses Wegs ist die in Fig. 6 durch die Linie WRS dargestellte Werkzeugrückzugsstellung wieder erreicht. Man beachte hier die relativ starke Neigung der Linie in dem Planquadrat 5E, welche einer relativ großen Rückzugsgeschwindigkeit der Schrauberklinge 48 aus der nach Beendigung der eigentlichen Verschraubungsphase erreichten Stellung WVES in die in Fig. 6 durch die Linie WRS angedeutete Werkzeugrückzugsstellung darstellt. Tatsächlich kann die Rückzugsgeschwindigkeit des Schraubwerkzeugs wesentlich größer sein als die Annäherungsgeschwindigkeit des Schraubwerkzeugs, die in den Planquadraten 5C und 5D durch die weit weniger geneigte Linie dargestellt ist.

Während der Rückzugsbewegung des Schraubwerkzeugs entsprechend Planquadrat 5E bedarf es einer Drehbewegung des Schraubwerkzeugs 40 grundsätzlich nicht. Dies ist in dem Planquadrat 4E dargestellt, wo zwischen 180° und 240° grundsätzlich keine Drehbewegung des Schraubwerkzeugs 40 erfolgt. Wenn an mittlerer Stelle dieses Planquadrats während eines kurzen Maschinenwinkels zwischen 200° und 215° der Antriebseinrichtungen 38 gemäß Fig. 8 dennoch eine kurze Phase des Drehens des Schraubwerkzeugs 40 vorgesehen ist, so hängt dies mit einer Spezialkontruktion der Schraubeinrichtung zusammen, auf die später noch eingegangen wird.

Zu beachten ist weiter, daß die früher bereits unter Bezugnahme auf die Planquadrate 3C und 3D angesprochene Schraubenzuführung durch das Rohr 32 auch noch während der Rückzugsphase des Schraubwerkzeugs, also im Winkelbereich von 180° - 240° des Maschinenwinkels der Antriebsvorrichtungen 38, fortgesetzt werden kann. Dies ist deshalb möglich, weil der Drehteller 52 während des Rückzugs des Schraubwerkzeugs 40 in Richtung auf die Rückzugsstellung WRS gemäß Fig. 6 immer noch stehen bleiben muß, mindestens solange, bis das Schraubwerkzeug in Fig.1 aus dem soeben geleerten Nest 56 völlig zurückgezogen ist und den nächsten Drehschaltschritt erst danach vollziehen kann.

Erst wenn bei einem Maschinenwinkel von 240°, gemessen an den Antriebsvorrichtungen 38, das Schraubwerkzeug 40 vollständig aus dem vorher von der jeweiligen Schraube entleerten Nest 56 zurückgetreten ist, d. h. die Stellung WRS gemäß Fig. 6 erreicht hat, kann der Drehteller 52 eine Drehbewegung beginnen, welche in den Planquadraten 4E und 4F zwischen 240 und 320° eingezeichnet ist. Innerhalb dieses Maschinenwinkels vollführt der Drehteller eine Drehung um 90°, so daß das soeben entleerte Nest 56 entsprechend dem rechts liegenden Nest in Fig. 5 im Uhrzeigersinn weitergeschaltet wird in die dort unten eingezeichnete Nestposition, während das bereits vorher gefüllte, in Fig. 5 obere Nest 56 in den Bereich der Verschraubungsachse VA gelangt. Man beachte, daß in den Planquadraten 4E und 4F die horizontale Linie zwischen 240° Maschinenwinkel und 320° Maschinenwinkel primär die Drehbewegung des Drehtellers 52 darstellt. Eine Drehbewegung des Schraubwerkzeugs 40 in dieser Phase ist möglich, aber nicht notwendig. Tatsächlich tritt während dieser Phase zwischen 240 und 320° des Maschinenwinkels auch eine Drehbewegung des Schraubwerkzeugs ein, die mit der Drehbewegung des Drehtellers 52 einhergeht. Dies hängt mit einer Besonderheit der weiter unten zu beschreibenden Schraubeinrichtung 24 zusammen. Die Drehbewegung des Schraubwerkzeugs 40 in dieser Phase von 240° - 320° Maschinenwinkel ist aber schraubtechnisch belanglos, weil in dieser Phase ja das Schraubwerkzeug 40 vollständig nach oben in die Position WRS gemäß Fig. 6 zurückgezogen ist, in der es keine schraubende Bewegung in eine Schraube 42 einleiten kann.

Die Zuführung der nächsten Schraube durch das Rohr 32 ist bei einem Maschinenwinkel von 240° der Antriebsvorrichtungen 38 beendet, wenn die Drehbewegung des Schalttellers in dem Arbeitswinkelbereich von 240° - 320° bei 240° beginnt. Dies ist notwendig, da ja während der Drehbewegung des Drehtellers 52 in dem Arbeitswinkelbereich von 240° - 320° (Planquadrate 4E und 4F) keine Übergabe von Schrauben 12 an der Übergabe 50 von dem Rohr 32 an ein Nest 56 stattfinden kann.

Wenn gemäß Zeile 4 die Schaltbewegung des Drehtellers 52 um 90° erfolgt ist, dies ist erreicht, wenn der Maschinenwinkel der Antriebseinrichtungen 38 von Fig. 8 den Winkelwert 320° im Planquadrat 4F erreicht hat, so befindet sich erneut eine Schraube 12 im Bereich der Verschraubungsachse VA und das Schraubwerkzeug, das sich zu diesem Zeitpunkt, d.h. bei Erreichen des Maschinenwinkels 320° noch in der Rückzugsstellung WRS gemäß Fig. 6 befindet, kann nun erneut eine Annäherungsbewegung beginnen, wie in der Zeile 5, und zwar dort in dem Planquadrat 5F dargestellt ist.

Die im Planquadrat 5F dargestellte geneigte Linie zwischen einem Maschinenwinkel von 320° und einem Maschinenwinkel von 350° an den Antriebseinrichtungen 38 der Fig. 8 entspricht dem Übergang des Schraubwerkzeugs 40 aus der Rückzugsstellung WRS gemäß Fig. 6 bis zum Anschlag an der Oberseite des Schraubenkopfs 42 und darüberhinaus bis zum Auftreffen des von dem Schraubwerkzeug 40 durch seine abwärts gerichtete Annäherungsbewegung nach unten mitgenommenen Schraubenschaftendes gegen den oberen Eingang der Gewindebohrung 28. Während dieses Abwärtsgangs des Schraubwerkzeugs 40 und mit ihm der Schraube 12 findet zunächst, wie aus Planquadrat 4F zu ersehen, keine Drehbewegung des Schraubwerkzeugs statt, denn die eigentliche Verschraubungsphase hat ja noch nicht begonnen. Zu beachten ist aber, daß während des Übergangs von dem Arbeitswinkel 320° bis zum Arbeitswinkel 350° bei nunmehr wieder stillstehendem Drehteller (der Stillstand ist beim Arbeitswinkel von 320° eingetreten, wie aus dem Planquadrat 4F zu ersehen) die Zuführung einer weiteren Schraube bereits wieder beginnen kann, wie im Planquadrat 3F im Anschluß an den Arbeitswinkel von 320° zu ersehen. Diese im Planquadrat 3F beginnende erneute Zuführbewegung einer weiteren Schraube ist in dem Planquadrat 3Bb zum besseren Verständnis noch einmal dargestellt. Man erkennt also, daß für das Zuführen der einzelnen Schrauben durch das Rohr 32 insgesamt ein Arbeitswinkel von 280°, nämlich zwischen der Winkelstellung 320° und der Winkelstellung 240° der Antriebseinrichtungen 38 von Fig. 8 zur Verfügung steht.

Das Schraubwerkzeug 40 ist innerhalb der Verschraubungseinrichtung federnd abgestützt, so daß es bei der Abwärtsbewegung gemäß Planquadrat 5F zwischen 320° und 350° federnd ausweichen kann. Einzelheiten darüber werden im folgenden noch bei der Beschreibung der Verschraubungseinrichtung 24 erörtert. Hier genügt es, darauf hinzuweisen, daß während der abwärts gerichteten Annäherungsbewegung des Schraubwerkzeugs 40 zwischen dem Arbeitswinkel von 320° und dem Arbeitswinkel von 350° das Schraubwerkzeug 40 gegenüber einer es nach abwärts in Richtung auf den Klemmkörper 14 annähernden Axialtreiberbaugruppe AT nach oben federnd ausweichen kann, so daß bei einem Auftreffen der Klingenkante 48 auf der konvexen Oberseite 44 der Schraube 42, d. h. bei einem Verfehlen des in seiner Winkellage noch nicht definierten Schraubwerkzeug-Eingriffsschlitzes 62, unter Aufbau einer Federvorspannung an der konvexen Oberseite 44 liegen bleibt, ohne daß in dem axialen Kraftübertragungsweg zwischen der Klingenunterkante 48 und dem oberen Eingang der Gewindebohrung 28 eine Überbeanspruchung auftritt. Der durch die Federung unter Erteilung einer Federvorspannung aufgenommene Hubweg im Falle eines Auftreffens der Klingenunterkante 48 auf der konvexen Oberseite 44 der Schraube 42 ist so groß, daß die dabei eingeleitete Federvorspannung ausreicht, um nach Herstellung einer Winkeldeckung zwischen der Klinge 48 und dem Schraubwerkzeug-Eingriffsschlitz 62 ein zwangsläufiges Eintreten der Klingenunterkante 48 in den Schraubwerkzeug-Eingriffsschlitz 62 zu bewirken, und zwar so tief, daß nachfolgend das für die eigentliche Verschraubung benötigte Schraubmoment von der Klingenunterkante 48 auf den Schraubwerkzeug-Eingriffsschlitz 62 übertragen werden kann. Die aufgebaute Vorspannung ist dabei vorzugsweise so groß, daß auch dann, wenn die Klinge mit ihrer Unterkante 48 in den Schraubwerkzeug-Eingriffsschlitz 62 eingeschnappt ist, noch eine Restvorspannung besteht, die ausreicht, um die notwendige Drehmomentübertragung von der Klinge 48 auf den Schraubwerkzeug-Eingriffsschlitz 62 zu garantieren, selbst dann, wenn der Schraubwerkzeug-Eingriffsschlitz 62 konisch gestaltet ist.

Aus dem Planquadrat 5F der Zeile 5 ergibt sich, daß nach Erreichen des Maschinenwinkels von 350° der die Abwärtsbewegung des Schraubwerkzeugs bewirkende Axialvorschub in der Verschraubungseinrichtung 40 zum Stillstand kommt, entsprechend dem horizontalen Verlauf des Striches zwischen dem Arbeitswinkel 350° bis zum Arbeitswinkel 360°. Während dieser Arbeitswinkelphase dreht sich die Unterkante der Klinge 48 auf der konvexen Oberseite des Schraubenkopfs 42, ohne daß zunächst eine weitere Axialbewegung des Schraubwerkzeugs 40 eintritt. Erst wenn die Unterkante der Klinge 48 Parallelstellung zum Verlauf des Schraubwerkzeug-Eingriffsschlitzes 62 erreicht hat, springt die Klinge mit ihrer Unterkante 48 in den Schraubwerkzeug-Eingriffsschlitz 62 des Schraubenkopfs 42 hinein und stellt eine Kupplung für die Drehmomentübertragung während des eigentlichen Verschraubungsvorgangs her.

Die in dem Planquadrat 5F geradlinig eingezeichnete, geneigte Linie zwischen dem Arbeitswinkel von 320° und dem Arbeitswinkel von 350° ist nur schematisch zu verstehen. Sie soll nicht zwingend zum Ausdruck bringen, daß die Annäherungsbewegung der Klingenunterkante 48 zwischen 320° und 350° mit konstanter Annäherungsgeschwindigkeit stattfindet. Es ist vielmehr denkbar und bringt Vorteile, wenn man die abwärts gerichtete Annäherungsgeschwindigkeit der Klingenunterkante 48 durch ein entsprechendes Programm so verlaufen läßt, daß beim Auftreffen der Klinge 48 auf die zunächst in der Stellung VVS innerhalb des Nests 56 gehaltene Schraube 12 die Auftreffgeschwindigkeit der Klingenunterkante auf der konvexen Oberseite 44 gering ist und weiterhin dann, wenn im Zuge der Abwärtsmitnahme der Schraube 12 in Richtung auf die Stellung GES die Auftreffgeschwindigkeit des unteren Endes des Schraubenschafts 46 auf den oberen Eingang der Gewindebohrung 28 ebenfalls gering ist. Durch die Geringhaltung der Auftreffgeschwindigkeit in diesen beiden Auftreffphasen kann die Gefahr eines Beschädigens der Oberseite 44 des gelegentlich hochfein bearbeiteten Schraubenkopfs 42 und auch die Gefahr einer Beschädigung der Gewindegänge am unteren Ende des Schraubenschafts 46 und am oberen Ende der Gewindebohrung 28 vermieden oder gering gehalten werden.

Die in dem Planquadrat 5F dargestellte Verweilzeit der Abwärtsbewegung zwischen dem Arbeitswinkel von 350° und dem Arbeitswinkel von 360° der Antriebvorrichtungen 38 ist so gewählt, daß innerhalb dieser Verweilzeit eine Drehbewegung des Schraubwerkzeugs 40 von einer halben Umdrehung (halbe Umdrehung des Schraubwerkzeugs 40) stattfinden kann, so daß selbst unter ungünstigsten Umständen ein Einschnappen der Klingenunterkante 48 in den Schraubwerkzeug-Eingriffsschlitz 62 stattfinden kann.

Damit die "Suchbewegung", die durch das Drehen der Klingenunterkante 48 auf der konvexen Oberseite 44 des Schraubenkopfes 42 vollzogen wird, für die Klinge selbst und für das Schraubenmaterial möglichst schonend ist, ist vorgesehen, daß während dieser Suchbewegung zwischen 350° und 360° gemäß Planquadrat 5F keine weitere Annäherungsbewegung der Klinge und auch keine weitere Vorspannungserhöhung stattfindet. Außerdem ist während dieser Suchphase, wie aus dem Planquadrat 4F zu ersehen, die Drehzahl des Schraubwerkzeugs zwischen dem Arbeitswinkel von 350° und dem Arbeitswinkel von 360° klein gehalten, was nicht nur eine schonende Behandlung der Oberseite 44 der jeweiligen Schraube 42 zur Folge hat, sondern auch ein zuverlässiges Einfallen der Klingenunterkante 48 in den Schraubwerkzeug-Eingriffsschlitz 62 gewährleistet: Ein Hinwegspringen der Klinge 48 über den Schraubwerkzeug-Eingriffsschlitz 62 im Zuge der Suchbewegung ist vermieden.

Erst wenn durch die Suchbewegung gemäß dem Planquadrat 4F und 5F dort jeweils zwischen 350 und 360° Maschinenwinkel mit Sicherheit ein Eingriff der Klingenunterkante 48 in den Schraubwerkzeug-Eingriffsschlitz 62 erreicht ist, beginnt die eigentliche Verschraubungsphase in der Stellung 0° des Arbeitswinkels der Antriebseinrichtungen 38 von neuem.

Zu den Legenden in der Spalte A ist noch folgendes anzumerken:

Teiletransport bedeutet Transport der Klemmstücke 14 durch die Bandzuführeinrichtung 20. Stillstandszeit 280° = 310 msec bedeutet Stillstandzeit des Drehtellers.

Schraubezuführen 280° bedeutet, daß die ganze Stillstandszeit von 280° = 310 msec des Drehtellers für das Zuführen der jeweiligen Schraube bis in das jeweils in der Übergabestellung 50 befindliche Nest 56 zur Verfügung steht. Zu beachten ist, daß diese für das Zuführen der Schraube reichlich bemessene Zeit sich weitgehend mit der eigentlichen Verschraubungsphase einer früher zugeführten Schraube überlappt, wie sich aus dem Vergleich der Zeilen 3, 4 und 5 ergibt.

Radial Servo ist ein Kurzausdruck für eine rotierende Werkzeugtreiber-Baugruppe, welche das Drehen des Schraubwerkzeugs während des eigentlichen Verschraubungsvorgangs gemäß Planquadraten 4C und 4D bewirkt.

Axial Servo ist ein Kurzausdruck für eine Axialtreiberbaugruppe, welche für die Axialbewegungen des Schraubwerkzeugs gemäß den Planquadraten 5C, 5D, 5E und 5F verantwortlich ist.

Einschraubweg 14 mm entspricht dem Einschraubweg der Schraube von der Stellung GES bis zur Stellung VES gemäß Fig. 6.

Steigung 0,8 mm ist die Steigung des Gewindes des Schraubenschaftes 46 und die Steigung des Innengewindes der Gewindebohrung 28 und entspricht der Relation der axialen Annäherungsbewegung gemäß den Planquadraten 5C und 5D und der Drehbewegung gemäß den Planquadraten 4C und 4D.

Man erkennt in Fig. 6, daß der Abstand der Klingenunterkante 48, dieser dargestellt durch die Linie WRS, in der Rückzugsstellung des Schraubwerkzeugs 40 von der Oberseite 44 der Schraube 12 äußerst kurz bemessen ist, so daß nach Einbringung der Schraube 12 in den Bereich der Verschraubungsachse VA durch Drehen des Drehtellers 52 nur eine äußerst kurze Zeit notwendig ist, um das Schraubwerkzeug 40 zum Eingriff mit der Oberseite 44 bzw. mit dem Schraubwerkzeug-Eingriffsschlitz 62 der Schraube 12 zu bringen. Dies ist deshalb möglich, weil durch die Drehbewegung des Drehtellers 52 um eine vertikale Achse, d. h. durch die Annäherungsbewegung der Nester 56 an die in Fig. 6 und 1 dargestellte Werkzeug-Eingriffsbereitschaftsstellung längs einer horizontalen Ebene das Vorbeigehen der in dem Bereich der Verschraubungsachse wandernden Schraube 12 an der Klingenunterkante 48 während des Drehwegs des Drehtellers 52 nur einen geringen Abstand der Klingenunterkante 48 von der Nestoberkante 64 erheischt. Weiterhin wird Zeit insbesondere auch dadurch eingespart, daß die zeitaufwendige Zuführung der Schrauben 12 durch das Rohr 32 die regelmäßig mit einer Vereinzelung und Orientierung der Schrauben 12 einhergehen muß, in zeitlicher Überlappung mit den Axialbewegungen gemäß den Planquadraten 5C, 5D, 5E und 5F stattfinden kann.

Weiterhin wird Zeit dadurch eingespart, daß die Rückzugsbewegung des Schraubwerkzeugs entsprechend dem Planquadrat 5E, wie durch die dortige größere Neigung der ST-Kurve von 180° - 240° Maschinenwinkel angedeutet, sehr viel rascher ablaufen kann als die den Planquadraten 5C und 5D entsprechende Annäherungsbewegung des Schraubwerkzeugs während der eigentlichen Verschraubungsphase.

Damit ist eine wesentliche Voraussetzung für kurze Verschraubungszeiten und damit für einen raschen Maschinenlauf der Montagemaschine 10 gewährleistet.

Die auf dem Drehteller 52 angebrachten vier Nester 56 (vgl. Fig. 5) sind im einzelnen aufgebaut wie in Fig. 6 dargestellt. Die Nester 56 umfassen jeweils einen axialen, d. h. zur Verschraubungsachse A parallelen Durchgang 66 durch den Drehteller 52. Dieser Durchgang 66 ist durch eine Schraubenkopfführungshülse 68 definiert, deren Innenquerschnitt dem Außenumfang des Schraubenkopfes 42 entspricht. Im oberen Bereich der Führungshülse 68 sind an einem Lagerwulst 70 Durchtrittshemmbacken 72 in gleichmäßiger Winkelverteilung über den Umfang der Schraubkopfführungshülse 68 schwenkbar gelagert. Diese Durchtrittshemmbacken ragen unter Federvorspannung mit ihren unteren Endabschnitten 74 in den Durchgang 66 hinein, so daß sie bei einer Abwärtsbewegung der Schrauben 12 zunächst eine Hemmwirkung auf das untere Ende der Schraubenschäfte 46 und später eine Hemmwirkung auf den unteren Rand der Schraubenköpfe 42 ausüben.

Beim Eintreffen einer Schraube 12 in der Übergabestellung 50 gemäß Fig. 1 treffen die Schrauben 12 mit den unteren Enden ihrer Schraubenschäfte 46 gegen die unteren Endabschnitte 74 der Durchtrittshemmbacken 72 auf, so daß die Schrauben in der in Fig. 6 dargestellten, durch die Linie VVS charakterisierten Verschraubungsvorbereitungsstellung zum Stillstand kommen.

Wenn sich der Drehteller 52 um zweimal 90° bewegt hat, so daß eine Schraube 12 von der Übergabestellung 50 in den Bereich der Verschraubungsachse VA gelangt ist und wenn dann das Verschraubungswerkzeug 40 seine Annäherungsbewegung gemäß Planquadrat 5F durchführt, so stößt der Schraubenkopf 42 mit seiner Unterkante gegen die unteren Endabschnitte 74 der Durchtrittshemmbacken 72, so daß eine Erhöhung der axialen Hemmkraft eintritt und die Schrauben 12 eine definierte Position einnehmen, in welcher die Suchbewegung des Schraubwerkzeugs gemäß Planquadrat 4F stattfinden kann. Es ist denkbar, daß beim Auftreffen des Schraubenkopfes 42 auf die Durchtrittshemmbacken 72 bereits annähernd Eingriff zwischen dem unteren Ende des Schraubenschafts 46 und dem oberen Eingang der Gewindebohrung 28 besteht. Es ist aber auch möglich, durch den Eingriff des Schraubenkopfes 42 mit den Durchtrittshemmbacken 72 eine Vorruhestellung herbeizuführen, d. h. eine Ruhestellung vor Herstellung des Eingriffs zwischen dem unteren Ende des Schraubenschafts 46 und dem oberen Eingang der Gewindebohrung 28, um schon in dieser Vorruhestellung die Suchbewegung durchführen zu können und dann mit definierter Annäherungsgeschwindigkeit den Schraubenschaft 46 an den oberen Eingang der Gewindebohrung 28 anzunähern und so eine äußerst schonende Eingriffsherstellung zwischen dem Außengewinde des Gewindeschafts 46 und dem Innengewinde der Gewindebohrung 28 zu erreichen.

Die Durchtrittshemmbacken 72 des Nests 56 sind durch einen Gummiring 76 oder durch eine zum Ring geschlossene Spiralfeder 76 belastet, so daß sie nur gegen Federkraft aus der in Fig. 6 gezeigten Stellung um den Wulst 70 ausschwenken können, wenn sie von dem unteren Ende des Schraubenschafts 46 oder dem unteren Rand des Schraubenkopfes 42 getroffen werden. Der Drehteller 52 ist in insgesamt vier jeweils um 90° voneinander beabstandete Winkelstellungen um die Drehachse 54 durch eine Verrastungseinrichtung 78 präzis festlegbar. Die Verrastungseinrichtung 78 ist dabei so gestaltet, daß der Drehteller in der jeweiligen Winkelstellung exakt festliegt, andererseits aber durch einen Drehantrieb unter Überwindung der Verrastungseinrichtung 78 fortgeschaltet werden kann.

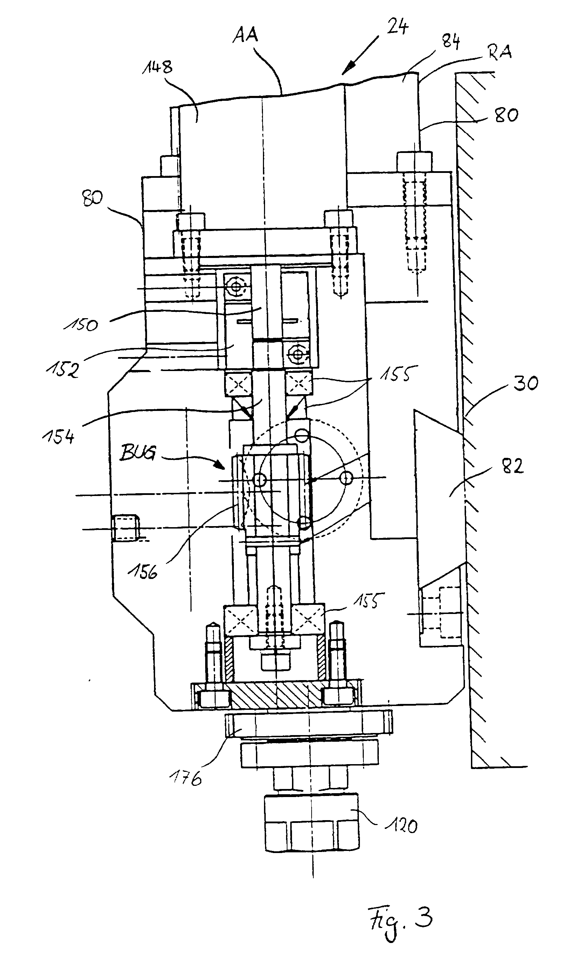

Die Schraubeinrichtung umfaßt einen Getriebeblock 80, der, wie aus Fig. 3 ersichtlich, mittels einer Schwalbenschwanzführung 82 an der Werkzeugplatte 30 verstellbar und lösbar angeordnet ist.

Der Getriebeblock 80 umfaßt einen axial feststehenden, rotierenden elektrischen Drehantriebsmotor 84, nämlich einen AC-Servo-Motor. Dieser elektrische Drehantriebsmotor 84 hat einen Läufer mit Ausgangswelle 86, auf welcher drehfest und axial unverschiebbar eine Wellenkupplungshülse 88 sitzt. Diese Wellenkupplungshülse 88 verbindet die Ausgangswelle 86 mit einer Anschlußwelle 90, die unverdrehbar und axial fest in der Wellenkupplungshülse 88 aufgenommen ist. Die Anschlußwelle 90 ist in ihrem unteren Abschnitt 92 als ein Polygonstab mit quadratischem Querschnitt ausgeführt. Auf diesem Polygonstab sitzt axial verschiebbar eine Werkzeugtreiberhülse 94. Die Werkzeugtreiberhülse 94 ist mittels zweier Wälzlager 96 und 98 in einer Pinole drehbar, aber gegenüber der Pinole axial unverschiebbar gelagert. Die beiden Wälzlager 96 und 98 sind durch eine Distanzhülse in axialem Abstand gehalten und durch eine Spannmutter 104 und eine Gegenspannmutter 106 unter Einschaltung der Distanzhülse 102 miteinander verspannt und an der Pinole 100 axial festgelegt.

Die Pinole 100 ist in Pinolenführungen 108 des Getriebeblocks 80 axial verschiebbar, jedoch gegenüber dem Getriebeblock 80 unverdrehbar. Zur Verhinderung des Drehens der Pinole 100 in den Pinolenführungen 108 ist an dem Getriebeblock eine Drehsicherungseinrichtung 110 angebracht, welche in einen Längsschlitz 112 der Pinole 100 eingreift. Das untere Ende des Längsschlitzes 112 definiert die oberstmögliche Stellung der Pinole 100.

Die Werkzeugtreiberhülse 94 ist mit einem Innenpolygon 116 ausgeführt, das in Richtung der Verschraubungsachse VA axial verschiebbar, aber unverdrehbar auf dem Polygonstab 92 sitzt und deshalb von dem Läufer, d. h. der Ausgangswelle 86 des elektrischen Drehantriebsmotors 84 in Drehung versetzt werden kann.

In einem Innenkonus 114 am unteren Ende der Werkzeugtreiberhülse 94 ist ein mit Außenkonus ausgebildetes Werkzeugaufnahmefutter 118 aufgenommen; dieses weist einen nach oben gerichteten axialen Fortsatz 122 auf, der einen polygonförmigen Außenquerschnitt besitzt und in dem Innenpolygon 116 unverdrehbar aufgenommen ist, so daß eine drehfeste Verbindung zwischen der Werkzeugtreiberhülse 94 und dem Werkzeugaufnahmefutter 118 gewährleistet ist. In einem unteren Endabschnitt 124 des Werkzeugaufnahmefutters 118 ist ein Polygonkanal 126 ausgebildet, in dem ein entsprechender Außenpolygonschaft 128 des Schraubwerkzeugs 40 unverdrehbar, aber axial verschiebbar aufgenommen ist. Die axiale Verschiebbarkeit des Werkzeugschafts 128 in dem Kanal 126 ist beschränkt durch das Zusammenwirken von Anschlagkugeln 130 einerseits, die in Radialbohrunger. 132 des unteren Endabschnitts 124 radial beweglich aufgenommen sind, und einer Einschnürung 134 des Werkzeugschafts 128 andererseits. Die Anschlagkugeln 130 sind in den sie aufnehmenden Radialbohrungen 132 durch eine Sicherungshülse 136 gesichert, durch deren Verdrehung oder Axialverschiebung den Anschlagkugeln 130 radialer Austritt aus den Radialkanälen 132 gewährt werden kann, so daß diese nicht mehr mit der Einschnürung zusammenwirken und der Werkzeugschaft 128 dann aus dem Polygonkanal 126 entnommen werden kann. Auf diese Weise ist ein leichter Austausch des Schraubwerkzeugs 40 möglich, wenn dessen Klinge 48 abgenutzt ist.

Das Schraubwerkzeug 40 steht unter der Wirkung einer Schraubendruckfeder 138, die innerhalb des Werkzeugaufnahmefutters 118 aufgenommen und unter axiale Vorspannung gesetzt ist. Diese Schraubendruckfeder stützt sich mit ihrem unteren Ende an einem Kopf 140 eines Stempels 142 ab, der mit seinem unteren Ende an dem oberen Ende des Werkzeugschafts 128 aufliegt. Die Schraubendruckfeder 138 ist mit ihrem oberen Ende an einem Stopfen 144 abgestützt, der durch einen Querstift 146 an dem Werkzeugaufnahmefutter 118 axial festgelegt ist. Damit ist das Schraubwerkzeug 40 in dem Werkzeugaufnahmefutter 118 axial gefedert festgelegt, indem es durch die unter Vorspannung stehende Schraubendruckfeder 138 über den Stempel 142 in eine Stellung gedrückt wird, die durch den Eingriff der Anschlagkugeln 130 mit dem oberen Ende der Einschnürung 134 bestimmt ist. Bei Auftreten einer aufwärts gerichteten Kraft an dem Schraubwerkzeug 40, und zwar einer Kraft, welche die Vorspannkraft der Feder 138 überschreitet, kann sich das Schraubwerkzeug 40 gegenüber dem Werkzeugaufnahmefutter 118 nach oben verschieben unter zunehmender Kompression der Schraubendruckfeder 138 solange, bis das untere Ende der Einschnürung 40 gegen die Anschlagkugeln 130 stößt.

Das Werkzeugaufnahmefutter 118 kann zusammen mit der Schraubendruckfeder 138 durch Lösen der kappenförmigen Spannmutter 120 leicht aus der Werkzeugtreiberhülse 94 ausgebaut werden, so daß es leicht möglich ist, nach Bedarf unterschiedliche Werkzeugaufnahmefutter mit unterschiedlichen Polygonkanälen für verschiedene Schraubwerkzeuge oder/und unterschiedlichen Schraubendruckfedern 138 für unterschiedliche Vorspannungen auszutauschen. Zum Austausch des Werkzeugs 40 allein, Austausch, der wegen der Abnützung dieses Werkzeugs häufiger vorgenommen werden muß, genügt es, die Sicherungshülse 136 in eine Kugelfreigabestellung zu bringen.

Die Pinole 100 ist durch einen rotierenden elektrischen Axialbewegungsmotor 148 verstellbar. Bei Axialverstellung nimmt die Pinole 100 über die Wälzlager 96, 98 die Werkzeugtreiberhülse 94 in axialer Richtung mit und damit auch das Werkzeugaufnahmefutter 118 und das Schraubwerkzeug 40. Auf diese Weise kann neben der von der Ausgangswelle 86 des elektrischen Drehantriebsmotors 84 erzeugten Drehbewegung auf das Drehwerkzeug auch eine Axialbewegung auf das Drehwerkzeug 40 übertragen werden, wie es nach der Beschreibung des Betriebsablaufs gemäß Fig. 7 erforderlich ist.

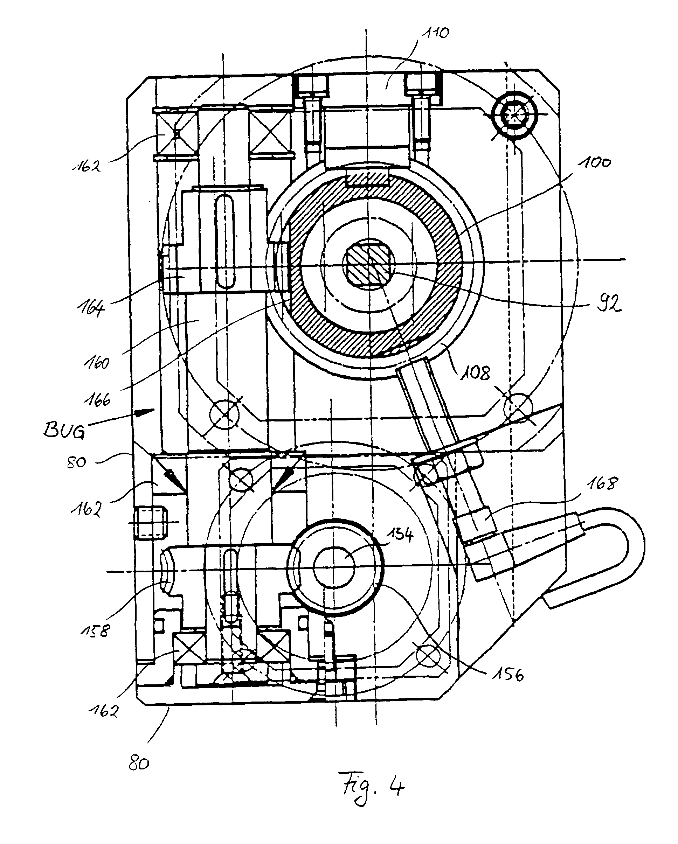

Der elektrische Axialantriebsmotor 148 besitzt, wie aus Fig. 3 ersichtlich, einen Läufer mit Ausgangswelle 150. Diese Ausgangswelle 150 steht über eine Kupplungshülse 152 in drehfester und axialfester Verbindung mit einer Anschlußwelle 154, die durch eine Lageranordnung 155 in dem Getriebeblock 80 gelagert ist. Auf der Anschlußwelle 154 sitzt eine Schnecke 156, die, wie aus Fig. 4 ersichtlich, mit einem Schneckenrad 158 kämmt. Das Schneckenrad 158 sitzt auf einer Querwelle 160, die in dem Getriebeblock 80 durch Wälzlager 162 drehbar gelagert ist. Auf der Querwelle 160 sitzt ferner ein Stirnrad 164, das in Eingriff mit einer an der Pinole angebrachten Zahnstange 166 steht. Durch den rotierenden Axialantriebsmotor 148, der ebenfalls ein AC-Servo-Motor sein kann, kann die Pinole 100 in Richtung der Verschraubungsachse VA hin- und herbewegt werden.

Es ist ohne weiteres ersichtlich, daß durch das Zusammenspiel der beiden Elektromotoren 84 und 148 die verschiedenen Drehund Axialbewegungen ausgeführt werden können, die im Zusammenhang mit dem ST-Diagramm gemäß Fig. 7 beschrieben worden sind.

Im Zuge der Beschreibung der Fig. 7 ist darauf hingewiesen worden, daß das Schraubwerkzeug 40 gegen Federkraft nach oben soll ausweichen können, wenn die Klinge 48 gegen die konvexe Oberseite 44 des Schraubenkopfs 42 stößt. Dies sollte aus der vorstehenden Beschreibung der Verschraubungseinrichtung nunmehr klar geworden sein: Wenn die Klinge 48 gegen die konvexe Oberseite der Schraube 12 stößt, so wird die Schraubendruckfeder 138 komprimiert und ihre Vorspannung erhöht. Das Werkzeugaufnahmefutter 118 kann also, wenn die Klinge 48 gegen die konvexe Oberseite 44 des Schraubenkopfs 42 stößt, weiter nach unten gehen, wobei während dieser weiteren Annäherungsbewegung des Werkzeugaufnahmefutters 118 nach unten das Schraubwerkzeug 40 in dem Werkzeugaufnahmefutter gegen die Wirkung der Schraubendruckfeder 138 nach oben verschoben und die Vorspannung der Schraubendruckfeder 138 erhöht wird.

Zu beachten ist dabei folgendes: Man kann die Zusammenfassung all derjenigen Teile, die sich bei der Axialbewegungen gemäß den Planquadraten 5C, 5D, 5E und 5F gemeinsam in axialer Richtung bewegen, von einer Axialtreiberbaugruppe sprechen, welche die folgenden Teile umfaßt: den Stopfen 144, den Querstift 146, die rotierende Werkzeugtreiberhülse 94, die Wälzlager 96 und 98, die Distanzhülse 102, die Spannmuttern 104 und 106, die Pinole 100 und das Werkzeugaufnahmefutter 118 mit den zugeordneten Hilfsteilen, nämlich der kappenförmigen Spannmutter 120, den Anschlagkugeln 130 und der Sicherungshülse 136. Diese Teile zusammen führen eine zwangsläufig von der jeweiligen Winkelstellung des elektrischen Axialantriebsmotors abhängige gemeinsame Bewegung aus. Die Masse all dieser Teile muß in axialer Richtung beschleunigt und abgebremst werden, wenn das Drehwerkzeug die Axialbewegungen nach unten gemäß Planquadrat 5C, 5D und 5F ausführt und auch die Axialbewegung nach oben gemäß Planquadrat 5E. Kritisch sind dabei vor allem die Annäherungsbewegungen gemäß Planquadrat 5F. Diese Bewegungen müssen nach einem genau vorgeschriebenen Programm ablaufen, das eingehalten werden muß, um zu verhindern, daß beim Auftreffen des Schraubwerkzeugs 40 auf den Schraubenkopf 42, beim Eingreifen des Schraubwerkzeugs 40 mit der Klinge 48 und beim Einrasten der Klinge 48 in den Schraubwerkzeug-Eingriffsschlitz 62 Beschädigungen eintreten und weiterhin, um zu verhindern, daß beim Zusammentritt des unteren Gewindeendes des Schraubenschafts 46 mit dem oberen Gewindeende der Gewindebohrung 28 an den jeweiligen Gewindegängen Beschädigungen eintreten. Dieses Problem ist bei der erfindungsgemäßen Ausbildung der Verschraubungseinrichtung dadurch wesentlich entschärft, daß das Schraubwerkzeug 40 über den Stempel 142 und den Stempelkopf 140 an der Schraubendruckfeder 138 abgestützt ist. Ein Überschwingen der axial gemeinsam bewegten Teile über eine bestimmte Position hinaus, die zur Einstellung einer bestimmten Position des Schraubwerkzeugs 40 vorgesehen ist, bleibt deshalb unschädlich, weil sie durch eine geringfügige zusätzliche Kompression der Schraubendruckfeder 138 kompensiert wird. Hinzu kommt, daß durch den Eingriff der Schnecke 156 in das Schneckenrad 158 eine mehr oder minder selbsthemmende Bewegungsübertragung von dem rotierenden Axialantriebsmotor 148 auf die gemeinsam axialbewegten Teile stattfindet, so daß schon an dieser Eingriffsstelle ein axiales Überschwingen der axialbewegten Teile und der ihnen antriebsmäßig verbundenen Teile zwischen der Schnecken-Schneckenrad-Paarung 156 und 158 und der Stirnrad-Zahnstangen-Paarung 164, 166 weitgehend unschädlich hinsichtlich Kollisionen zwischen der Schraubwerkzeugklinge 48 und dem Schraubenkopf 42 sowie zwischen dem unteren Ende des Schraubenschaftgewindes und dem oberen Ende des Gewindes der Gewindebohrung 28 sind. Wenn dennoch Überschwingen eintritt, etwa infolge von unvermeidbarem Spiel zwischen den Komponenten der axial gemeinsam bewegten Teile, so wird dieses, wie gesagt, durch die Schraubendruckfeder 138 kompensiert.

Wichtig ist, daß die axial bewegte Masse des Schraubwerkzeugs 40, des Stempels 142 und der Schraubendruckfeder 138 klein ist gegen die übrigen axial bewegten Getriebekomponenten und der mit diesen zur zwangsläufigen gemeinsamen Bewegung verbundenen Teile.

Da für die Axialbewegung des Schraubwerkzeugs 40 entscheidend die axiale Bewegungsvorgabe durch den die Schraubendruckfeder 138 stützenden Stopfen 144 ist, kann man von einer Axialtreiberbaugruppe sprechen, die man sich in dem Stopfen 144 konzentriert vorstellen kann und die in Fig. 1 mit AT bezeichnet ist.

Der die Axialtreiberbaugruppe AT in ihrem jeweiligen Bewegungszustand (zum Bewegungszustand gehört sowohl die jeweilige Position als auch die jeweilige Axialgeschwindigkeit) bestimmende Axialantriebsmotor 148 ist ein AC-Servo-Motor mit elektrischer Steuerung. Dieser Servo-Motor und die Steuerung sind so ausgebildet, daß der Motor mit sehr geringen Verzögerungszeiten, beispielsweise während einer halben Umdrehung, auf eine Nenndrehzahl von beispielsweise 5250 Umdrehungen pro Minute gebracht werden kann und mit ebenso geringer Verzögerung auf Stillstand abgeschaltet werden kann. Außerdem hat dieser Motor nach erreichtem Stillstand ein erhebliches Widerstandsmoment gegen Verdrehung durch äußere Kräfte, z. B. Massenkräfte, die ihn über die erreichte Winkelposition hinaus verdrehen wollen. Es ist ohne weiteres einzusehen, daß mit Hilfe dieser Mittel der Betriebsablauf nach dem ST-Diagramm gemäß Fig. 7 in den Bewegungsphasen der Zeile 5 genau vorgegeben werden kann.

Zu beachten ist auch, daß durch den Axialantriebsmotor 148, die Schnecken-SchneckenradPaarung 156, 158 und die Stirnrad-Zahnstangen-Paarung 164, 166 sowie die Axialtreiberbaugruppe AT der Bewegungsablauf des Stopfens 144 autonom, d. h. unabhängig von der Gewindesteigung des Gewindebolzens 46 und der Gewindebohrung 28 vorgegeben ist. Sollten in den Gewinden des Gewindeschafts 46 und der Gewindebohrung 28 Steigungsfehler auftreten, so werden diese durch eine mehr oder minder große Kompressionsänderung in der Schraubendruckfeder 138 ohne weiteres kompensiert. Vorteilhaft ist dabei, wenn die Schraubendruckfeder so wie in Fig. 1 dargestellt von einer sehr langen und sehr stark komprimierten Schraubendruckfeder mit geringer Federkonstante gebildet ist, die ihre notwendige Federkraft eben nicht aus hoher Federkonstante, sondern aus der hohen Kompression bezieht, so daß bei Änderungen des Kompressionszustands die aus einer Verkürzung oder Verlängerung der Federlänge zwischen dem Stempelkopf 140 und dem Stopfen 144 sich ergeben, die von der Feder ausgeübte Kraft stets annähernd konstant bleibt. Damit ist nämlich sichergestellt, daß die zwischen dem Schraubwerkzeug 40 und der Schraube 12 wirkende Axialkraft unabhängig von etwaigen Steigungsfehlern immer konstant bleibt.

Der elektrische Drehantriebsmotor 84 ist ebenfalls ein AC-Servo-Motor ähnlicher Bauart wie oben für den elektrischen Axialantriebsmotor 148 beschrieben. Er läßt deshalb eine genaue Festlegung der Winkeleinstellung seines Läufers, dargestellt in Form seiner Ausgangswelle 86, zu, und er läßt ferner eine genaue Festlegung der Drehzahl zu, die ja entsprechend den Gewindesteigungen einer bestimmten Axialbewegung der Axialtreiberbaugruppe AT entsprechen muß, damit die autonom vorgegebenen Axial- und Drehbewegungen in ihrer Relation der Gewindesteigung in den Gewinden des Schraubenschafts 46 und der Gewindebohrung 28 entsprechen.

Die Eindringtiefe des Gewindeschafts 46 in die Gewindebohrung 28 kann durch die autonome Bewegung der durch eine gemeinsame Steuerung oder wenigstens eine synchronisierte Steuerung gesteuerten Motoren 84 und 148 festgelegt werden einfach dadurch, daß die Axialbewegung und die Drehbewegung zu einem bestimmten Zeitpunkt zum Stillstand kommen. Es ist aber auch denkbar, die Beendigung des eigentlichen Schraubvorgangs entsprechend den Planquadraten 5C und 5D der Fig. 7 beispielsweise aufgrund einer Drehmomenterfassung bei einem vorbestimmten Drehmoment zu Ende zu bringen.

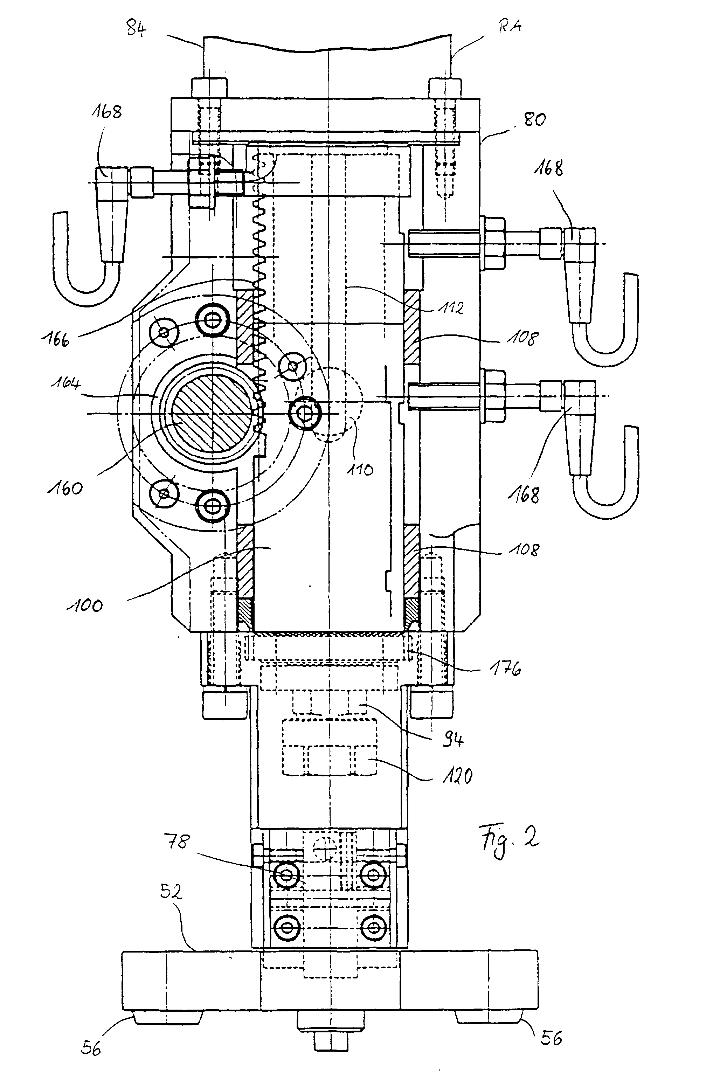

Die elektrischen Motoren 84 und 148 können mit Drehzahl und Winkelpositionrückmeldung arbeiten. Diese Rückmeldung kann innerhalb der Motoren und der ihnen zugeordneten Steuerung erfolgen. Es ist aber auch möglich, Drehweg und Drehzahl außerhalb der Motoren 84 und 148 abzugreifen, z. B. durch Sensoren, die in Fig. 2 bei 168 eingezeichnet sind.

Es wurde weiter oben bereits auf die rotierende Schaltbewegung des Drehtellers 52 hingewiesen, die notwendig ist, um die einzelnen Schrauben 12 von der Übergabestelle 50 in zwei Schritten von jeweils 90° in den Bereich der Verschraubungsachse VA zu bewegen. In Fig. 1 erkennt man, daß der Drehteller 52 durch eine Drehtellerwelle 170 angetrieben ist, welche mittels Wälzlagern 172 in dem Getriebeblock 80 drehbar gelagert ist. Auf der Drehtellerwelle 170 sitzt ein Kupplungsrad 174, welches in Kupplungseingriff mit einem auf der Werkzeugtreiberhülse 94 festgemachten Kupplungsrad 176 steht. Wenn das Schraubwerkzeug 40 seine Werkzeugrückzugsstellung WRS gemäß Fig. 6 einnimmt, so ist, wie aus Fig. 1 zu ersehen, das Kupplungsrad 176 in Kupplungseingriff mit dem Kupplungsrad 174. Dies bewirkt eine Drehung des Drehtellers in den Planquadraten 4E und 4Ff zwischen den Maschinenwinkeln 240° und 320° der Antriebseinrichtungen 38 von Fig. 8, eine Drehbewegung, die, wie schon ausgeführt, nur stattfinden kann, wenn entsprechend den Planquadraten 5E und 5F im Maschinenwinkelbereich zwischen 240° und 320° das Schraubwerkzeug 40 sich in der Rückzugsstellung WRS gemäß Fig. 6 befindet. Die Fig. 7 zeigt dabei, daß es gelungen ist, die Zuführung der Schrauben durch den Drehteller gemäß den Planquadraten 4E und 4F auf denjenigen Drehwinkel der Antriebseinrichtungen 38 der Fig. 8 zu beschränken, der, wie die Planquadrate 2E und 2F zeigen, ohnehin notwendig ist, um die Klemmstücke 14 in Fluchtungsstellung mit der Verschraubungsachse VA zu bringen und wieder herauszutransportieren. Dies ist auch eine Konsequenz aus der erfindungsgemäßen Unterteilung des Zuführwegs der Schrauben 12 aus der Schraubenversorgungseinheit 34 in zwei Abschnitte, nämlich die der Verschraubungsachse VA nähere Zuführwegstrecke ZW1, die von den Nestern 56 in jeweils zwei Schaltschritten durchlaufen wird, und die der Verschraubungsachse fernere Zuführwegstrecke ZW2, die von dem Rohr 32 gebildet ist. Die Zuführwegstrecke ZW1 kann streng im Maschinentakt befahren werden, unabhängig von Geschwindigkeitsschwankungen in der Zuführwegstrecke ZW2, so daß der Schraubentransport in der Zuführwegstrecke ZW1 ohne weiteres in das Ablaufprogramm gemäß Fig. 7 eingegliedert werden kann.

Wie aus Fig. 5 ersichtlich, kann in der Stellung, welcher die Nester 56 jeweils zwischen der Übergabestation 50 und dem Bereich der Verschraubungsachse VA einnehmen, eine Beobachtungseinrichtung 178 vorgesehen sein. In dieser Beobachtungsstation 178 befindet sich beispielsweise eine Fernsehkamera 180, welche die jeweils von einem Nest 56 gehaltene Schraube erfaßt und mit dem Soll-Bild einer elektronisch gespeicherten Schraube vergleicht. Sobald Abweichungen festgestellt werden, die zu einem unbefriedigenden Arbeitsergebnis der Verschraubung führen können, wird durch einen der Fernsehkamera 180 nachgeschalteten Auswertungscomputer ein Befehl an die übergeordnete Montagemaschine 10 gegeben dahingehend, daß das mit fehlerhafter Schraube ausgeführte Endprodukt ausgeworfen wird.

Zum Aufbau des Getriebeblocks ist noch nachzutragen, daß die mit dem rotierenden Drehantriebsmotor 84 rotierenden Teile, nämlich die Anschlußwelle 90, der Polygonstab 92, die Werkzeugtreiberhülse 94, das Werkzeugaufnahmefutter 118 mit den Hilfsteilen kappenförmige Spannmutter 120, Anschlagkugeln 130 und Sicherungshülse 136 eine rotierende Werkzeugtreiber-Baugruppe RT bilden. Diese rotierende Werkzeugtreiber-Baugruppe RT kann verhältnismäßig schwungmomentarm ausgeführt sein, da sie mit ihren wesentlichen Teilen radial innerhalb der Pinole 100 untergebracht ist.

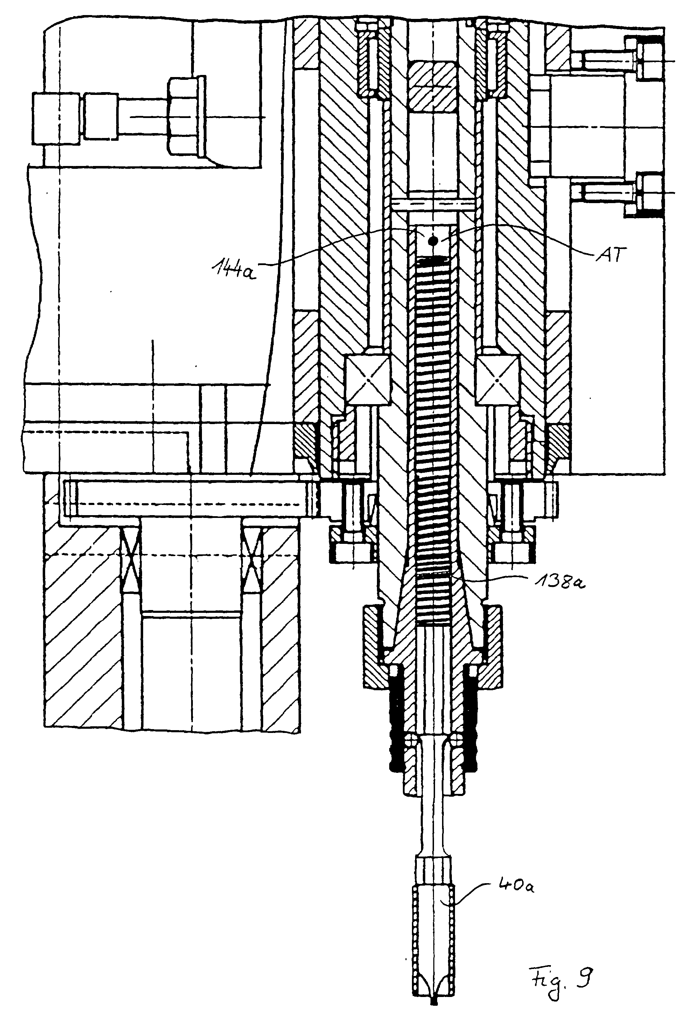

Bei der Beschreibung des Betriebsablaufs anhand der Fig. 7 wurde davon ausgegangen, daß beim Auftreffen des Schraubwerkszeugs mit der Klinge 48 auf der Oberseite 44 des Schraubenkopfs 42 durch rechtzeitige Beendigung der axialen Annäherungsbewegung der Axialtreiberbaugruppe AT nur eine relativ geringfügige Kompression der Schraubendruckfeder 138 eintritt, ausreichend eben, um eine Wegreserve für das Schraubwerkzeug 40 bereitzustellen, die ausreicht, um nach Herstellung der Überdeckung von Klinge 48 und Schraubwerkzeug-Eingriffsschlitz 62 die Klinge 48 zur Drehmomentübertragung in den Werkzeug-Eingriffsschlitz 62 einrasten zu lassen. Es wurde weiter davon ausgegangen, daß die axiale Bewegung des Schraubwerkzeugs während des eigentlichen Schraubvorgangs entsprechend den Planquadraten 4C, 4D und 5C, 5D stattfindet, indem während dieser Phase die Axialtreiberbaugruppe AT laufend abwärts bewegt wird und damit während der ganzen Verschraubungsphase eine annähernd konstante Länge der Schraubendruckfeder 138 aufrechterhalten wird. In Fig. 9 ist eine Abwandlung zur Ausführungsform der Fig. 1 dargestellt, in der analoge Teile mit gleichen Bezugszeichen versehen sind, wie in Fig.1 jeweils ergänzt durch den Buchstaben a. Im Unterschied zu der Ausführungsform nach Fig. 1 ist eine wesentlich größere Länge der Schraubendruckfeder 138a vorgesehen. Bei dieser Ausführungsform kann man in Abwandlung gegenüber dem Betriebsablauf gemäß Fig. 7 die Axialtreiberbaugruppe AT schon vor Beginn der eigentlichen Verschraubungsbewegung soweit nach unten vorrücken lassen, daß die Schraubendruckfeder 138a um eine dem gesamten axialen Schraubungsweg entsprechend dem Abstand zwischen VVS und VES entsprechende Längendifferenz verkürzt wird. In diesem Falle steht die Axialtreiberbaugruppe AT während des eigentlichen Verschraubungsvorgangs in axialer Richtung still und der für die Verschraubung notwendige Axialvorschub des Schraubwerkzeugs 40a wird durch Längsexpansion der Schraubendruckfeder 138a erzwungen. Hier ist es besonders wichtig, daß die Schraubendruckfeder 138a in jeder Längeneinstellung eine annähernd konstante Vorspannkraft liefert, was wiederum dadurch erreicht werden kann, daß die Schraubendruckfeder 138a im entspannten Zustand sehr viel länger ist als in Fig. 9 dargestellt und durch Einspannung zwischen dem Schraubwerkzeug 40a und dem Stopfen auf die in Fig. 9 erscheinende Länge verkürzt ist.

In der Fig. 6 sind die den Stellungen VVS (Verschraubungsvorbereitungsstellung), GES (Gewindeeinfaßstellung) und VES (Verschraubungsendstellung) der Schraube 12 entsprechenden Stellungen des Werkzeugs zusätzlich eingetragen und mit WVVS bzw. WGES bzw. WVES bezeichnet und den jeweiligen Niveaulinien zugeordnet, welche die Stellungen VVS, GES und VES der Schraube 42, damit aber auch die Stellungen WVVS, WGES und WVES des Schraubwerkzeugs 40 charakterisieren.

In Fig. 1 ist der elektrische Drehantriebsmotor 84 zusammen mit seiner Ausgangswelle 86 durch das übergeordnete Bezugszeichen RA bezeichnet, welches für rotierenden Werkzeugantrieb steht, während der Axialbewegungsmotor 148 in Fig. 1 und insbesondere in Fig. 3 mit dem übergeordneten Bezugszeichen AA versehen ist, welches für Axialbewegungsantrieb steht und neben dem Axialbewegungsmotor 148 das Bewegungsumwandlungsgetriebe BUG gemäß Fig. 2 umfaßt, welches seinerseits von der Schnecken-Schneckenrad-Kombination 156, 158 und der Stirnrad-Zahnstangen-Kombination 164, 168 sowie der Querwelle 106 gebildet ist.

Ferner ist in Fig. 1 die von dem Werkzeugaufnahmefutter 118, der kappenförmigen Spannmutter 120, den Anschlagkugeln 130 und der Sicherungshülse 126 gebildete Baugruppe mit dem übergeordneten Bezugszeichen EXU (EXU = austauschbare Baueinheit) bezeichnet. Weiter ist die aus der Kompressionsfeder 138, dem Stempel 142 und dem Stempelkopf 140 zusammengesetzte, insgesamt gefederte Baugruppe als GAV bezeichnet, was für Axialankupplungsmittel steht.

Da die Schrauben 12 mit undefinierter Winkellage ihres Werkzeug-Eingriffsschlitzes 62 durch das Rohr 32 zugeführt werden und diese undefinierte Winkellage des Werkzeug-Eingriffsschlitzes 62 auch noch in der Verschraubungsvorbereitungsstellung VVS gemäß Fig. 6 besteht, der Eingriff der Klinge 48 in den Werkzeug-Eingriffsschlitz 62 also erst durch die Suchbewegung des Schraubwerkzeugs entsprechend der Drehbewegung des Schraubwerkzeugs im Planquadrat 4F zwischen 350° und 360° des Maschinenwinkels herbeigeführt wird, ist auch dann, wenn das Drehwerkzeug während der eigentlichen Verschraubungsphase einen konstanten Drehweg von beispielsweise 17,5 Umdrehungen (Planquadrat 4A) ausführt, die Drehstellung des Schraubwerkzeugs 40 nach Beendigung der eigentlichen Verschraubungsphase unbestimmt. Dies hat zur Folge, daß nach Beendigung der eigentlichen Verschraubungsphase, wenn die rotierende Werkzeugtreiber-Baugruppe RT mit der Axialantriebsbaugruppe AT wieder nach oben fährt, um das Schraubwerkzeug 40 in die Werkzeugrückzugsstellung WRS zu bringen, das Kupplungsrad 176 nicht zwangsläufig in Kupplungseingriff mit dem Kupplungsrad 174 trifft, sondern Zahn gegen Zahn stoßen kann. Um dies zu verhindern, ist dafür Sorge getragen, daß während des Rückhubs der Axialtreiberbaugruppe AT eine Korrekturdrehung der Werkzeugtreiber-Baugruppe RT stattfindet. Diese Korrekturbewegung entspricht dem Vorgang, der im Planquadrat 4E zwischen 200° und 215° dargestellt ist. Die Steuerung weiß aufgrund von Drehwegmessung während des Abwärtshubs, welcher Korrekturdrehwinkel erforderlich ist, um die Kupplungsräder 174 und 176 wieder in Kupplungseingriff bringen zu können und bemißt danach die Korrekturdrehung, die zwischen 200° und 215 ° im Planquadrat 4E stattfindet und sich jeweils nur über einen Bruchteil der Zahnteilung erstreckt.

## Patentansprüche

1. Verschraubungseinrichtung zum Verschrauben von zwei Schraubkomponenten (12,14) durch relative Drehbewegung und relative Axialbewegung der Schraubkomponenten (12,14) längs einer Verschraubungsachse (VA), diese Verschraubungseinrichtung (24) umfassend Positionierungsmittel (56) zum Positionieren einer zweiten Schraubkomponente (12) in einer mit einer ersten Schraubkomponente (14) längs der Verschraubungsachse (VA) fluchtenden Verschraubungsvorbereitungsstellung (VVS) und ein Schraubwerkzeug (40) zum Angriff an der zweiten Schraubkomponente (12), wobei dieses Schraubwerkzeug (40) längs der Verschraubungsachse (VA) aus einer den Eingriff des Schraubwerkzeugs (40) mit der zweiten Schraubkomponente (12) bewirkenden Werkzeug-Eingriffsbewirkungsstellung (WVVS) in eine Schraubkomponenten-Eingriffsbewirkungsstellung (WGES axial beweglich ist, sofern diese nicht schon bei Erreichen der Werkzeug-Eingriffsbewirkungsstellung (WVVS) erreicht ist, wobei das Schraubwerkzeug (40) nach Bewirkung des Schraubkomponenteneingriffs unter Drehmitnahme der zweiten Schraubkomponente (12) verdrehbar und entsprechend der Verschraubung der Schraubkomponenten (12,14) weiterhin axial beweglich ist,
wobei das Schraubwerkzeug (40) durch eine rotierende Werkzeugtreiber-Baugruppe (RT) eines elektrischen Drehantriebs (RA) nach einem vorbestimmbaren Drehprogramm drehbar ist, wobei das Schraubwerkzeug (40) ferner durch axial gefederte Axialankoppelungsmittel (GAV) an eine axial bewegliche Axialtreiberbaugruppe (AT) zur axialen Mitnahme angekoppelt ist und diese Axialtreiberbaugruppe (AT) durch einen elektrischen Axialbewegungantrieb (AA) mit vorbestimmbarem Axialbewegungsprogramm axial beweglich ist,
**dadurch gekennzeichnet,**
**daß** das Schraubwerkzeug (40) längs der Verschraubungsachse (VA) aus einer das Einführen der zweiten Schraubkomponente (12) in die Verschraubungsvorbereitungsstellung (VVS) gestattenden Werkzeug-Rückzugsstellung (WRS) in die Werkzeug-Eingriffsbewirkungsstellung (WVVS) axial beweglich ist,
**daß** die rotierende Werkzeugtreiber-Baugruppe (RT) in einer Pinole (100) drehbar gelagert und vermittels einer axial verschiebbaren Drehverbindung (92, 94) mit einem Läuferteil (86) eines axial feststehenden, rotierenden elektrischen Drehantriebsmotors (84) des elektrischen Drehantriebs (RA) gekoppelt ist, wobei die Pinole (100) in einer Pinolenführung (108) axial verschiebbar gelagert ist und wobei die Pinole (100) als Teil der Axialtreiberbaugruppe (AT) durch den elektrischen Axialbewegungsantrieb (AA) axial in der Pinolenführung (108) verschiebbar ist.

2. Verschraubungseinrichtung nach Anspruch 1,
**dadurch gekennzeichnet,**
**daß** mindestens einer der beiden elektrischen Antriebe - elektrischer Drehantrieb (RA) und elektrischer Axialbewegungsantrieb (AA) - einen AC-Servomotor (84,148) mit Programmsteuerungsmitteln umfaßt.

3. Verschraubungseinrichtung nach einem der Ansprüche 1 und 2,
**dadurch gekennzeichnet,**
**daß** die Masse des Schraubwerkzeugs (40) und der axial gefederten Axialankoppelungsmittel (GAV) klein ist im Verhältnis zur axial beweglichen Masse der Axialtreiberbaugruppe (AT).

4. Verschraubungseinrichtung nach einem der Ansprüche 1 - 3,
**dadurch gekennzeichnet,**
**daß** der elektrische Axialbewegungsantrieb (AA) einen rotierenden elektrischen Axialbewegungsmotor (148) umfaßt und daß ein Läuferteil (150) des rotierenden elektrischen Axialbewegungsmotors (148) über ein Bewegungsumwandlungsgetriebe (BUG) mit der Pinole (100) in Antriebsverbindung steht.

5. Verschraubungseinrichtung nach Anspruch 4,
**dadurch gekennzeichnet,**
**daß** das Bewegungsumwandlungsgetriebe (BUG) von einer Schnecken-Schneckenradpaarung (156,158) an dem Läuferteil (150) des rotierenden elektrischen Axialbewegungsmotors (148) und einer Zahnrad-Zahnstangenpaarung (164,166) an der Pinole (100) gebildet ist.

6. Verschraubungseinrichtung nach einem der Ansprüche 1 - 5,
**dadurch gekennzeichnet,**
**daß** die rotierende Werkzeugtreiber-Baugruppe (RT) eine austauschbare Baueinheit (EXU) umfaßt, welche das Schraubwerkzeug (40) und die axial gefederten Axialankopplungsmittel (GAV) miteinschließt.

7. Verschraubungseinrichtung nach Anspruch 6,
**dadurch gekennzeichnet,**
**daß** das Schraubwerkzeug (40) in der Baueinheit (EXU) lösbar aufgenommen ist.

8. Verschraubungseinrichtung nach einem der Ansprüche 1 - 7,
**dadurch gekennzeichnet,**
**daß** die axial gefederten Axialankoppelungsmittel (GAV) komprimierbare Federmittel (138) umfassen.

9. Verschraubungseinrichtung nach Anspruch 8,
**dadurch gekennzeichnet,**
**daß** die komprimierbaren Federmittel (138) unter axialer Kompressionsvorspannung stehen.

10. Verschraubungseinrichtung nach einem der Ansprüche 1 - 9,
**dadurch gekennzeichnet,**
**daß** für die Axialbewegung der Axialtreiberbaugruppe (AT) durch den Axialbewegungsantrieb (AA) ein vorbestimmbarer Programmablauf zur Verfügung steht, umfassend
a) eine axiale Annäherungsbewegung der Axialtreiberbaugruppe (AT) annähernd entsprechend einer Axialbewegung des Schraubwerkzeugs (40) von der Werkzeug-Rückzugsstellung (WRS) bis zur Werkzeug-Eingriffsbewirkungsstellung (WVVS);
b) - soweit noch nötig - eine weitere axiale Annäherungsbewegung der Axialtreiberbaugruppe (AT) annähernd entsprechend einem Übergang des Schraubwerkzeugs (40) von der Werkzeug-Eingriffsbewirkungsstellung (WVVS) in die Schraubkomponenten-Eingriffsbewirkungsstellung (WGES);
c) eine der Verschraubungsphase zwischen den Schraubkomponenten (12,14) entsprechende Axialbewegung der Axialtreiberbaugruppe (AT) und damit annähernd entsprechend dem Übergang des Schraubwerkzeugs (40) von der Schraubkomponenten-Eingriffsbewirkungsstellung (WGES) in eine Verschraubungsendstellung (WVES);
d) eine Rückzugsbewegung der Axialtreiberbaugruppe (AT) annähernd entsprechend dem Übergang des Schraubwerkzeugs (40) von der Verschraubungsendstellung (WVES) zur Rückzugsstellung (WRS) des Schraubwerkzeugs (40).

11. Verschraubungseinrichtung nach einem der Ansprüche 1 - 9,
**dadurch gekennzeichnet,**
**daß** für die Axialbewegung der Axialtreiberbaugruppe (AT) durch den Axialbewegungsantrieb (AA) ein vorbestimmbarer Programmablauf zur Verfügung steht, umfassend
a) eine axiale Annäherungsbewegung der Axialtreiberbaugruppe (AT) annähernd entsprechend einer Axialbewegung des Schraubwerkzeugs (40) von der Werkzeug-Rückzugsstellung (WRS) bis zur Werkzeug-Eingriffsbewirkungsstellung (WVVS);
b) - soweit noch nötig - eine weitere axiale Annäherungsbewegung der Axialtreiberbaugruppe (AT) annähernd entsprechend einem Übergang des Schraubwerkzeugs (40) von der Werkzeug-Eingriffsbewirkungsstellung (WVVS) in die Schraubkomponenten-Eingriffsbewirkungsstellung (WGES);
c) eine weitere axiale Annäherungsbewegung der Axialtreiberbaugruppe (AT) nach Erreichen der Schraubkomponenten-Eingriffsbewirkungsstellung (WGES) des Schraubwerkzeugs (40), diese weitere Annäherungsbewegung mindestens entsprechend der axialen Bewegung des Schraubwerkzeugs (40) während der Verschraubungsphase der Schraubkomponenten (12,14), wobei diese weitere axiale Annäherungsbewegung dazu dient, die axial gefederten Axialankoppelungsmittel (GAV) vorzuspannen bzw. - falls sie schon vorgespannt sind - zusätzlich vorzuspannen,
d) annähernden Stillstand der Axialtreiberbaugruppe (AT) während der Verschraubungsphase und
e) eine Rückzugsbewegung der Axialtreiberbaugruppe (AT) annähernd entsprechend der Summe der axialen Annäherungsbewegungen gemäß a), c) und gegebenenfalls b).

12. Verschraubungseinrichtung nach einem der Ansprüche 1 - 10,
**dadurch gekennzeichnet,**
**daß** für die Axialbewegung der Axialtreiberbaugruppe (AT) durch den Axialbewegungsantrieb (AA) ein vorbestimmbarer Programmablauf zur Verfügung steht, bei dem die axiale Bewegungsgeschwindigkeit der Axialtreiberbaugruppe (AT) während mindestens eines Teils der dem Übergang des Schraubwerkzeugs (40) von der Rückzugsstellung (WRS) in die Werkzeug-Eingriffsbewirkungsstellung (WVVS) annähernd entsprechenden Annäherungsbewegung der Axialtreiberbaugruppe (AT) oder/und die axiale Bewegungsgeschwindigkeit der Axialtreiberbaugruppe (AT) während mindestens eines Teils der dem Übergang des Schraubwerkzeugs (40) von der Werkzeug-Eingriffsbewirkungsstellung (WVVS) in die Schraubkomponenten-Eingriffsbewirkungsstellung (WGES) annähernd entsprechenden Annäherungsbewegung der Axialtreiberbaugruppe (AT) größer ist als die axiale Bewegungsgeschwindigkeit der Axialtreiberbaugruppe (AT) während der Verschraubungsphase.

13. Verschraubungseinrichtung nach einem der Ansprüche 1 - 12,
**dadurch gekennzeichnet,**
**daß** für die Axialbewegung der Axialtreiberbaugruppe (AT) durch den Axialbewegungsantrieb (AA) ein vorbestimmbarer Programmablauf zur Verfügung steht, bei dem die axiale Annäherungsgeschwindigkeit der Axialtreiberbaugruppe (AT) in einer finalen Teilannäherungsphase des Schraubwerkzeugs (40) an die Schraubwerkzeug-Eingriffsbewirkungsstellung (WVVS) oder/und während einer finalen Teilannäherungsphase des Schraubwerkzeugs (40) an die Schraubkomponenten-Eingriffsbewirkungsstellung (WGES) kleiner ist als die axiale Bewegungsgeschwindigkeit jeweils vor Beginn dieser finalen Teilannäherungsphase.

14. Verschraubungseinrichtung nach einem der Ansprüche 1 - 13,
**dadurch gekennzeichnet,**
**daß** für die Axialbewegung der Axialtreiberbaugruppe (AT) durch den Axialbewegungsantrieb (AA) und für die Drehbewegung der rotierenden Werkzeugtreiber-Baugruppe (RT) ein Programmablauf zur Verfügung steht, bei dem die Drehzahl der rotierenden Werkzeugtreiber-Baugruppe (RT) während einer finalen axialen Teilannäherungsphase des Schraubwerkzeugs (40) an die Werkzeug-Eingriffsbewirkungsstellung (WVVS) oder/und an die Schraubkomponenten-Eingriffsbewirkungsstellung (WGES) kleiner ist als die Drehzahl während der Verschraubungsphase.

15. Verschraubungseinrichtung nach einem der Ansprüche 1 - 14,
**dadurch gekennzeichnet,**
**daß** für die Drehbewegung der rotierenden Werkzeugtreiber-Baugruppe (RT) ein Programmablauf zur Verfügung steht, welcher das Anfahren eines Bezugsdrehwinkels und gegebenenfalls beliebiger Winkelabstände gegenüber diesem Bezugsdrehwinkel erlaubt.

16. Verschraubungseinrichtung nach einem der Ansprüche 1 - 15,
**dadurch gekennzeichnet,**
**daß** die axial gefederten Axialankoppelungsmittel (GAV) ständig unter solcher Vorspannung stehen, daß während einer im Betriebsablauf auftretenden axialen Verformung der axial gefederten Axialankoppelungsmittel (GAV) die von diesen ausgeübte Axialkraft annähernd konstant bleibt.

17. Verschraubungseinrichtung nach einem der Ansprüche 1 - 16,
**dadurch gekennzeichnet,**
**daß** ein rotierender elektrischer Axialbewegungsmotor (148) des elektrischen Axialbewegungsantriebs (AA) und ein rotierender elektrischer Drehantriebsmotor (84) des elektrischen Drehantriebs (RA) achsparallel und parallel zur Verschraubungsachse (VA) angeordnet sind.

18. Verschraubungseinrichtung nach Anspruch 17,
**dadurch gekennzeichnet,**
**daß** der elektrische Axialbewegungsmotor (148) und der elektrische Drehantriebsmotor (84) an einer betriebsmäßig starren Getriebebaugruppe (80) festgelegt sind, welche gewünschtenfalls an einem Träger (30), beispielsweise einer übergeordneten Maschine (10), anbringbar ist.

19. Verschraubungseinrichtung nach Anspruch 18,
**dadurch gekennzeichnet,**
**daß** die Drehachsen der beiden elektrischen Motoren (148,84) der Motorenbaugruppe annähernd auf engstmöglichen Abstand angenähert sind.

20. Verschraubungseinrichtung nach einem der Ansprüche 1 - 19,
**dadurch gekennzeichnet,**
**daß** sie zum Verarbeiten von zweiten Schraubkomponenten (12) ausgebildet ist, welche nur in einer vorbestimmten relativen Drehwinkellage des Schraubwerkzeugs (40) zu der jeweiligen zweiten Schraubkomponente (12) die Herbeiführung eines Drehmitnahmeeingriffs als Folge eines axialen Bewegungssprungs des Schraubwerkzeugs (40) gestatten und daß dieser axiale Bewegungssprung des Schraubwerkzeugs (40) unter Entspannung einer in die axial gefederten Axialankoppelungsmittel (GAV) eingebrachten Vorspannung herbeiführbar ist.

21. Verschraubungseinrichtung nach einem der Ansprüche 1 - 20,
**dadurch gekennzeichnet,**
**daß** sie an einer übergeordneten Maschine (10), insbesondere einer Montagemaschine (10), angebracht ist, wobei Lagermittel (18) für nacheinander zu verschraubende erste Schraubkomponenten (14) durch einen Schrittantrieb (38) relativ zu der Verschraubungseinrichtung (24) fortschaltbar sind.

22. Verschraubungseinrichtung nach einem der Ansprüche 1 - 21,
**dadurch gekennzeichnet,**
**daß** der Verschraubungseinrichtung (24) eine Zuführeinrichtung (34,32,52) für nacheinander zu verarbeitende zweite Schraubkomponenten (12) zugeordnet ist.

23. Verschraubungseinrichtung nach Anspruch 22,
**dadurch gekennzeichnet,**
**daß** die Zuführeinrichtung (3432,52) für die zweiten Schraubkomponenten (12) eine der Verschraubungsvorbereitungsstellung (VA) angrenzende finale Zuführwegstrecke (ZW1) umfaßt, welche in einer zur Verschraubungsachse (VA) im wesentlichen orthogonalen Ebene liegt.

24. Verschraubungseinrichtung nach Anspruch 23,
**dadurch gekennzeichnet,**
**daß** die Zuführeinrichtung (34,32,52) in der finalen Zuführwegstrecke (ZW1) einen Umlaufträger (52) umfaßt, welcher um eine zur Verschraubungsachse (VA) im wesentlichen parallele Umlaufachse (54) fortschaltbar ist und eine Mehrzahl von Positionierungsmitteln (56) für zweite Schraubkomponenten (12) umfaßt, wobei diese Positionierungsmittel (56) durch Fortschaltung des Umlaufträgers (52) nacheinander in Flucht mit der Verschraubungsachse (VA) bringbar sind.

25. Verschraubungseinrichtung nach Anspruch 24,
**dadurch gekennzeichnet,**
**daß** der Umlaufträger (52) als ein Drehteller (52) ausgebildet ist.

26. Verschraubungseinrichtung nach einem der Ansprüche 1 - 25,
**dadurch gekennzeichnet,**
**daß** die Positionierungsmittel (56) zum Positionieren der zweiten Schraubkomponente (12) in Richtung der Verschraubungsachse (VA) verlaufende Durchgänge (66) aufweisen, welche dem Durchtritt der zweiten Verschraubungsmittel einen definierten Widerstand entgegensetzen.

27. Verschraubungseinrichtung nach Anspruch 26,
**dadurch gekennzeichnet,**
**daß** die Durchgänge (66) wenigstens auf einem Teil der von ihnen gebildeten Durchgänge (66) durch in radialer Richtung bezüglich der Verschraubungsachse (VA) federnd vorgespannte Durchtrittshemmbacken (72) begrenzt sind, welche unter der Wirkung einer durch das Schraubwerkzeug (40) ausgelösten axialen Annäherungsbewegung der jeweiligen zweiten Schraubkomponente (12) an die jeweilige erste Schraubkomponente (14) auslenkbar sind.

28. Verschraubungseinrichtung nach einem der Ansprüche 22 - 27,
**dadurch gekennzeichnet,**
**daß** die Zuführeinrichtung (34,32,52) für die zweiten Schraubkomponenten (12) zumindest in einer der Verschraubungsachse (VA) naheliegenden finalen Zuführwegstrecke (ZW1) durch mindestens einen der elektrischen Antriebe - elektrischer Drehantrieb (RA) oder/und elektrischer Axialbewegungsantrieb (AA) - antreibbar ist.

29. Verschraubungseinrichtung nach einem der Ansprüche 22 - 28,
**dadurch gekennzeichnet,**
**daß** mindestens ein der Verschraubungsachse (VA) naher Teil (52) der Zuführeinrichtung ((34,32,52) zeitweise mit dem elektrischen Drehantrieb (RA) der rotierenden Werkzeugtreiber-Baugruppe (RT) kuppelbar ist.

30. Verschraubungseinrichtung nach Anspruch 29,
**dadurch gekennzeichnet,**
**daß** der der Verschraubungsachse (VA) nahe Teil (52) der Zuführeinrichtung (34,32,52) jeweils dann mit dem elektrischen Drehantrieb (RA) der rotierenden Werkzeugtreiber-Baugruppe (RT) kuppelbar ist, wenn die rotierende Werkzeugtreiber-Baugruppe (RT) hinsichtlich der Verschraubung der Schraubkomponenten (12,14) unwirksam ist.

31. Verschraubungseinrichtung nach Anspruch 29 oder 30,
**dadurch gekennzeichnet,**
**daß** der der Verschraubungsachse (VA) nahe Teil (52) der Zuführeinrichtung (34,32,52) an den elektrischen Drehantrieb (RA) durch eine Kupplungseinrichtung (174,176) an- bzw. abkuppelbar ist, welche durch den elektrischen Axialbewegungsantrieb (AA) betätigbar ist.

32. Verschraubungseinrichtung nach Anspruch 31,
**dadurch gekennzeichnet,**
**daß** die rotierende Werkzeugtreiber-Baugruppe (RT) ein erstes Kupplungsrad umfaßt (176), welches mit einem zweiten Kupplungsrad (174) durch axiale Relativbewegung in und außer Eingriff zu bringen ist und daß das erste Kupplungsrad (176) mit der Axialtreiberbaugruppe (AT) zur gemeinsamen axialen Bewegung verbunden ist und daß das zweite Kupplungsrad (174) mit dem der Verschraubungsachse nahen Teil (52) der Zuführeinrichtung (34,32,52) in Antriebsverbindung steht.

33. Verschraubungseinrichtung nach Anspruch 32,
**dadurch gekennzeichnet,**
**daß** das erste Kupplungsrad (176) jeweils dann in Kupplungseingriff mit dem zweiten Kupplungsrad (174) steht, wenn die Axialtreiberbaugruppe (AT) sich annähernd in einer der Werkzeug-Rückzugsstellung (WRS) entsprechenden Stellung befindet, auskuppelbar ist, wenn die Axialtreiberbaugruppe (AT) eine axiale Annäherungsbewegung entsprechend der Axialbewegung des Schraubwerkzeugs (40) von der Werkzeug-Rückzugsstellung (WRS= zur Werkzeug-Eingriffsbewirkungsstellung (WVVS) ausführt und wieder einkuppelbar ist, wenn die Axialtreiberbaugruppe (AT) die Bewegung entsprechend der Bewegung des Schraubwerkzeugs (40) von einer Verschraubungsendstellung (WVES) in die Werkzeug-Rückzugsstellung (WRS) ausführt.

34. Verschraubungseinrichtung nach einem der Ansprüche 29 - 33,
**dadurch gekennzeichnet,**
**daß** zur Vorbereitung des Ankuppelns des der Verschraubungsachse (VA) nahen Teils (52) der Zuführeinrichtung (34,32,52) an die rotierende Werkzeugtreiber-Baugruppe (RT) die letztere in eine vorbestimmte Winkellage einstellbar ist.

35. Verschraubungseinrichtung nach einem der Ansprüche 23 - 34,
**dadurch gekennzeichnet,**
**daß** die Zuführeinrichtung (34,32,52) eine der Verschraubungsachse (VA) fernere Zuführwegstrecke (ZW2) aufweist, welche an die der Verschraubungsachse (VA) nahe, finale Zuführwegstrecke (ZW1) in einer Übergabeposition (50) anschließt.

36. Verschraubungseinrichtung nach Anspruch 35,
**dadurch gekennzeichnet,**
**daß** die der Verschraubungsachse (VA) fernere Zuführwegstrecke (ZW2) einen Zuführkanal (32) für die zweiten Schraubkomponenten (12) aufweist.

37. Verschraubungseinrichtung nach Anspruch 36,
**dadurch gekennzeichnet,**
**daß** ein Kanalende des Zuführkanals (32) in einer Übergabeposition (50) über jeweils einem Positionierungsmittel (56) eines der Verschraubungsachse (VA) nahen Teils (52) der Zuführeinrichtung (34,32,52) endet und daß eine Mehrzahl von Positionierungsmitteln (56) nacheinander in die Übergabeposition (50) einstellbar sind.

38. Verschraubungseinrichtung nach einem der Ansprüche 22 - 37,
**dadurch gekennzeichnet,**
**daß** im Bereich der Zuführeinrichtung (34,32,52) eine Beobachtungseinrichtung (178,180) für die durch die Zuführeinrichtung (34,32,52) zugeführten zweiten Schraubkomponenten (12) angeordnet ist.

39. Verschraubungseinrichtung nach Anspruch 38,
**dadurch gekennzeichnet,**
**daß** die Beobachtungseinrichtung (178,180) im Verlauf einer der Verschraubungsachse (VA) nahen Zuführwegstrecke (ZW1) angeordnet ist.

40. Verschraubungseinrichtung nach Anspruch 39,
**dadurch gekennzeichnet,**
**daß** die Beobachtungseinrichtung (178,180) stationär an einer Beobachtungsstelle angeordnet ist, welche an einer Verweilstation der jeweiligen zweiten Schraubkomponente (12) angeordnet ist.

## Claims

1. Screwing device for screwing two screwing components (12, 14) by relative rotary movement and relevant axial movement of the screwing components (12, 14) along a screwing axis (VA), this screwing device (24) comprising positioning means (56) for positioning a second screwing component (12) in a preparatory screwing position (VVS) aligning with a first screwing component (14) along the screwing axis (VA) and a screwing tool (40) for acting on the second screwing component (12), this screwing tool (40) being axially movable along the screwing axis (VA) from a tool engagement-inducing position (WVVS) causing engagement of the screwing tool (40) with the second screwing component (12) into a screwing component engagement-inducing position (WGES), if this has not already been achieved on attainment of the tool engagement-inducing position (WVVS), wherein the screwing tool (40) can continue to be axially moved rotatably and in accordance with screwing of the screwing components (12, 14) after effecting screwing component engagement with rotary entrainment of the second screwing component (12), the screwing tool (40) being rotatable in accordance with a predeterminable rotary programme owing to a rotating tool driver subassembly (RT) of an electric rotary drive (RA), the screwing tool (40) also being coupled for axial entrainment to an axially movable axial driver subassembly (AT) by axially sprung axial coupling means (GAV) and this axial driver subassembly (AT) is axially movable with predeterminable axial movement programme owing to an electric axial movement drive (AA), **characterised in that** the screwing tool (40) can be axially moved along the screwing axis (VA) from a tool return position (WRS) allowing introduction of the second screwing component (12) into the preparatory screwing position (VVS) into the tool engagement-inducing position (WVVS), **in that** the rotating tool driver subassembly (RT) is rotatably mounted in a sleeve (100) and is coupled by means of an axially displaceable rotary connection (92, 94) to a rotor component (86) of an axially fixed, rotating electrical rotary drive motor (84) of the electric rotary drive (RA), the sleeve (100) being axially rotatably mounted in a sleeve guide (108) and the sleeve (100) being axially displaceable in the sleeve guide (108) as a component of the axial driver subassembly (AT) owing to the electric axial movement drive (AA).

2. Screwing device according to claim 1, **characterised in that** at least one of the two electric drives - electric rotary drive (RA) and electric axial movement drive (AA) - comprises an AC servomotor (84, 148) with programme control means.

3. Screwing device according to either of claims 1 and 2, **characterised in that** the weight of the screwing tool (40) and of the axially sprung axial coupling means (GAV) is low in comparison to the axially movable weight of the axial driver subassembly (AT) .

4. Screwing device according to any of claims 1 to 3, **characterised in that** the electric axial movement drive (AA) comprises a rotating electric axial movement motor (148), and **in that** a rotor component (150) of the rotating electric axial movement motor (148) is in driving connection with the sleeve (100) via a movement converting gearing (BUG).

5. Screwing device according to claim 4, **characterised in that** the movement converting gearing (BUG) is formed by a worm/worm gear pairing (156, 158) on the rotor component (150) of the rotating electric axial movement motor (148) and a toothed wheel/toothed rack pairing (164, 166) on the sleeve (100).

6. Screwing device according to any of claims 1 to 5, **characterised in that** the rotating tool driver subassembly (RT) comprises an exchangeable unit (EXU) which also includes the screwing tool (40) and the axially sprung axial coupling means (GAV).

7. Screwing device according to claim 6, **characterised in that** the screwing tool (40) is detachably received in the unit (EXU).

8. Screwing device according to any of claims 1 to 7, **characterised in that** the axially sprung axial coupling means (GAV) comprise compressible spring means (138).

9. Screwing device according to claim 8, **characterised in that** the compressible spring means (138) are subject to axial compression bias.

10. Screwing device according to any of claims 1 to 9, **characterised in that** a predeterminable programme flow is available for the axial movement of the axial driver subassembly (AT) owing to the axial movement drive (AA), comprising
a) an axial approach movement of the axial driver subassembly (AT) approximately corresponding to an axial movement of the screwing tool (40) from the tool return position (WRS) up to the tool engagement-inducing position (WVVS);
b) - if it is still necessary - a further axial approach movement of the axial driver subassembly (AT) approximately corresponding to a transition of the screwing tool (40) from the tool engagement-inducing position (WVVS) into the screwing component engagement-inducing position (WGES);
c) an axial movement of the axial driver subassembly (AT) in accordance with the screwing phase between the screwing components (12, 14) and therefore approximately in accordance with the transition of the screwing tool (40) from the screwing component engagement-inducing position (WGES) into a screwing end position (WVES);
d) a return movement of the axial driver subassembly (AT) approximately corresponding to the transition of the screwing tool (40) from the screwing end position (WVES) to the return position (WRS) of the screwing tool (40).

11. Screwing device according to any of claims 1 to 9, **characterised in that** a predeterminable programme flow is available for the axial movement of the axial driver subassembly (AT) owing to the axial movement drive (AA), comprising
a) an axial approach movement of the axial driver subassembly (AT) approximately corresponding to an axial movement of the screwing tool (40) from the tool return position (WRS) up to the tool engagement-inducing position (WVVS);
b) - if it is still necessary - a further axial approach movement of the axial driver subassembly (AT) approximately corresponding to a transition of the screwing tool (40) from the tool engagement-inducing position (WVVS) into the screwing component engagement-inducing position (WGES);
c) a further axial approach movement of the axial driver subassembly (AT) after achieving the screwing component engagement-inducing position (WGES) of the screwing tool (40), this further approach movement at least in accordance with the axial movement of the screwing tool (40) during the screwing phase of the screwing components (12, 14), this further axial approach movement being used to bias the axially sprung axial coupling means (GAV) or, if they are already biased, to additionally bias them,
d) approximate standstill of the axial driver subassembly (AT) during the screwing phase and
e) a return movement of the axial driver subassembly (AT) approximately in accordance with the sum of the axial approach movements according to a), c) and optionally b).

12. Screwing device according to any of claims 1 to 10, **characterised in that** a predeterminable programme flow is available for the axial movement of the axial driver subassembly (AT) owing to the axial movement drive (AA) in which the axial movement speed of the axial driver subassembly (AT) during at least a portion of the approach movement of the axial driver subassembly (AT) approximately corresponding to the transition of the screwing tool (40) from the return position (WRS) into the tool engagement-inducing position (WVVS) and/or the axial movement speed of the axial driver subassembly (AT) during at least a portion of the approach movement of the axial driver subassembly (AT) approximately corresponding to the transition of the screwing tool (40) from the tool engagement-inducing position (WVVS) into the screwing component engagement-inducing position (WGES) is greater than the axial movement speed of the axial driver subassembly (AT) during the screwing phase.

13. Screwing device according to any of claims 1 to 12, **characterised in that** a predeterminable programme flow is available for the axial movement of the axial driver subassembly (AT) owing to the axial movement drive (AA), in which programme flow the axial approach speed of the axial driver subassembly (AT) in a final partial approach phase of the screwing tool (40) to the screwing tool engagement-inducing position (WVVS) and/or during a final partial approach phase of the screwing tool (40) to the screwing component engagement-inducing position (WGES) is lower than the axial movement speed before the start of this final partial approach phase in each case.

14. Screwing device according to any of claims 1 to 13, **characterised in that** a programme flow is available for the axial movement of the axial driver subassembly (AT) owing to the axial movement drive (AA) and for the rotary movement of the rotating tool driver subassembly (RT), in which programme flow the speed of the rotating tool driver subassembly (RT) during a final axial partial approach phase of the screwing tool (40) to the tool engagement-inducing position (WVVS) and/or to the screwing component engagement-inducing position (WGES) is less than the speed during the screwing phase.

15. Screwing device according to any of claims 1 to 14, **characterised in that** a programme flow is available for the rotary movement of the rotating tool driver subassembly (RT) which allows approach of a reference rotary angle and optionally any angular spacings with respect to this reference rotary angle.

16. Screwing device according to any of claims 1 to 15, **characterised in that** the axially sprung axial coupling means (GAV) are constantly subject to such a bias that during an axial deformation of the axially sprung axial coupling means (GAV) occurring in the operating process, the axial force exerted thereby is approximately constant.

17. Screwing device according to any of claims 1 to 16, **characterised in that** a rotating electric axial movement motor (148) of the electric axial movement drive (AA) and a rotating electric rotary drive motor (84) of the electric rotary drive (RA) are arranged axially parallel and parallel to the screwing axis (VA).

18. Screwing device according to claim 17, **characterised in that** the electric axial movement motor (148) and the electric rotary drive motor (84) are fixed to an operationally rigid gearing subassembly (80) which can optionally be provided on a carrier (30), for example a superordinate machine (10).

19. Screwing device according to claim 18, **characterised in that** the axes of rotation of the two electric motors (148, 84) of the motor subassembly are approached approximately to the narrowest possible spacing.

20. Screwing device according to any of claims 1 to 19, **characterised in that** it is constructed for processing second screwing components (12) which allow the bringing about of a rotary entrainment engagement as a consequence of an axial movement jump of the screwing tool (40) only in a predetermined relative rotary angle position of the screwing tool (40) relative to the respective second screwing component (12), and **in that** this axial movement jump of the screwing tool (40) can be brought about by relieving a bias introduced into the axially sprung axial coupling means (GAV).

21. Screwing device according to any of claims 1 to 20, **characterised in that** it is provided on a superordinate machine (10), in particular an assembly machine (10), wherein bearing means (18) for successive first screwing components (14) to be screwed can be advanced relative to the screwing direction (24) by a step switching mechanism (38).

22. Screwing device according to any of claims 1 to 21, **characterised in that** a feed device (34, 32, 52) is associated with the screwing device (24) for successive second screwing components (12) to be processed.

23. Screwing device according to claim 22, **characterised in that** the feed device (34, 32, 52) comprises a final feed distance (ZW1) adjoining the screwing preparatory position (VA) for the second screwing components (12), which feed distance is located in a plane substantially orthogonal to the screwing axis (VA).

24. Screwing device according to claim 23, **characterised in that** in the final feed distance (ZW1) the feed device (34, 32, 52) comprises a rotary carrier (52) which can be advanced by a rotary axis (54) substantially parallel to the screwing axis (VA) and comprises a plurality of positioning means (56) for second screwing components (12), wherein these positioning means (56) can be brought successively into alignment with the screwing axis (VA) by advancing the rotary carrier (52).

25. Screwing device according to claim 24, **characterised in that** the rotary carrier (52) is constructed as a rotary table (52).

26. Screwing device according to any of claims 1 to 25, **characterised in that** the positioning means (56) for positioning the second screwing component (12) has passages (66) extending in the direction of the screwing axis (VA) and putting up a defined resistance to penetration of the second screwing means.

27. Screwing device according to claim 26, **characterised in that** the passages (66) are limited, at least on a portion of the passages (66) formed by them, by passage-impeding jaws (72) resiliently biased in the radial direction with respect to the screwing axis (VA), and which can be deflected onto the respective first screwing component (14) under the effect of an axial approach movement of the respective second screwing component (12) triggered by the screwing tool (40).

28. Screwing device according to any of claims 22 to 27, **characterised in that** the feed device (34, 32, 52) for the second screwing components (12) can be driven, at least in a final feed distance (ZW1) located close to the screwing axis (VA), owing to at least one of the electric drives - electric rotary drive (RA) and/or electric axial movement drive (AA).

29. Screwing device according to any of claims 22 to 28, **characterised in that** at least one of the parts (52) of the feed device (34, 32, 52) close to the screwing axis (VA) can be intermittently coupled to the electric rotary drive (RA) of the rotating tool driver subassembly (RT).

30. Screwing device according to claim 29, **characterised in that** the part (52) of the feed device (34, 32, 52) close to the screwing axis (VA) can be respectively coupled to the electric rotary drive (RA) of the rotating tool driver subassembly (RT) if the rotating tool driver subassembly (RT) is ineffective with respect to screwing of the screwing components (12, 14).

31. Screwing device according to claim 29 or 30, **characterised in that** the part (52) of the feed device (34, 32, 52) close to the screwing axis (VA) can be coupled to or decoupled from the electric rotary drive (RA) by a coupling device (174, 176) which can be actuated by the electric axial movement drive (AA).

32. Screwing device according to claim 31, **characterised in that** the rotating tool driver subassembly (RT) comprises a first coupling wheel (176) which can be brought into and out of engagement with a second coupling wheel (174) owing to axial relative movement, and **in that** the first coupling wheel (176) is connected to the axial driver subassembly (AT) for common axial movement, and **in that** the second coupling wheel (174) is in driving connection with the part (52) of the feed device (34, 32, 52) close to the screwing axis.

33. Screwing device according to claim 32, **characterised in that** the first coupling wheel (176) is in respective coupling engagement with the second coupling wheel (174) if the axial driver subassembly (AT) is approximately in a position corresponding to the tool return position (WRS), is decouplable if the axial driver subassembly (AT) performs an axial approach movement in accordance with the axial movement of the screwing tool (40) from the tool return position (WRS) to the tool engagement-inducing position (WVVS) and can be coupled again if the axial driver subassembly (AT) performs the movement in accordance with the movement of the screwing tool (40) from a screwing end position (WVES) into the tool return position (WRS).

34. Screwing device according to any of claims 29 to 33, **characterised in that** to prepare coupling of the part (52) of the feed device (34, 32, 52) close to the screwing axis (VA) to the rotating tool driver subassembly (RT), the tool driver subassembly is adjustable into a predetermined angular position.

35. Screwing device according to any of claims 23 to 34, **characterised in that** the feed device (34, 32, 52) has a feed distance (ZW2) more remote from the screwing axis (VA) and which adjoins the final feed distance (ZW1) close to the screwing axis (VA) in a transfer position (50).

36. Screwing device according to claim 35, **characterised in that** the feed distance (ZW2) more remote from the screwing axis (VA) has a feed duct (32) for the second screwing components (12).

37. Screwing device according to claim 36, **characterised in that** one duct end of the feed duct (32) ends in a transfer position (50) via a respective positioning means (56) of a part (52) of the feed device (34, 32, 52) close to the screwing axis (VA), and **in that** a plurality of positioning means (56) can be set successively into the transfer position (50).

38. Screwing device according to any of claims 22 to 37, **characterised in that** an observation device (178, 180) for the second screwing components (12) fed via the feed device (34, 32, 52) is arranged in the region of the feed device (34, 32, 52).

39. Screwing device according to claim 38, **characterised in that** the observation device (178, 180) is arranged in the course of a feed distance (ZW1) close to the screwing axis (VA).

40. Screwing device according to claim 39, **characterised in that** the observation device (178, 180) is arranged stationarily on an observation point which is arranged on a dwell station of the respective second screwing component (12).

## Revendications

1. Dispositif de vissage destiné à visser deux composants à visser (12, 14) par un mouvement rotatif relatif et un déplacement axial relatif des composants à visser (12, 14) le long d'un axe de vissage (VA), ce dispositif de vissage (24) comprenant des moyens de positionnement (56) destinés à placer un deuxième composant à visser (12) dans une position de préparation au vissage (VVS), dans laquelle il se trouve aligné avec un premier composant à visser (14) le long de l'axe de vissage (VA), et comprenant un outil de vissage (40) destiné à s'appliquer sur le deuxième composant à visser (12), cet outil de vissage (40) étant axialement mobile, le long de l'axe de vissage (VA), pour passer d'une position de mise en prise avec l'outil (WVVS), provoquant la prise de l'outil de vissage (40) sur le deuxième composant à visser (12), dans une position de mise en prise avec le composant à visser (WGES), dans la mesure où celle-ci n'a pas déjà été atteinte lorsque la position de mise en prise avec l'outil (WVVS) a été atteinte, l'outil de vissage (40), une fois en prise avec le composant à visser, étant susceptible de tourner, en entraînant dans sa rotation le deuxième composant à visser (12), et étant, en outre, axialement mobile en fonction du vissage des composants à visser (12, 14),
l'outil de vissage (40), entraîné par un ensemble de pilotage d'outil rotatif (RT) d'un mécanisme électrique d'entraînement en rotation (RA), étant susceptible de tourner suivant un programme de rotation susceptible d'être prédéterminé, l'outil de vissage (40) étant, en outre, accouplé, par des moyens de couplage axial (GAV) sollicités élastiquement dans la direction axiale, à un ensemble de pilotage axial axialement mobile (AT), afin d'être entraîné axialement, et cet ensemble de pilotage axial (AT), entraîné par un mécanisme électrique de déplacement axial (AA) étant axialement mobile suivant un programme de déplacement axial susceptible d'être prédéterminé,
**caractérisé en ce que**
l'outil de vissage (40) est axialement mobile, le long de l'axe de vissage (VA), pour passer d'une position de recul d'outil (WRS), permettent le placement du deuxième composant à visser (12) dans la position de préparation au vissage (VVS), à la position de mise en prise avec l'outil (WVVS),
**en ce que** l'ensemble de pilotage d'outil rotatif (RT) est monté tournant dans un fourreau (100) et, grâce à la présence d'une liaison en rotation (92, 94) axialement déplaçable, est couplé à un rotor (86) d'un moteur électrique d'entraînement en rotation (84), rotatif et axialement fixe, du mécanisme électrique d'entraînement en rotation (RA), le fourreau (100) étant monté axialement mobile dans un élément de guidage du fourreau (108) et le fourreau (100), en tant que partie de l'ensemble de pilotage axial (AT), étant susceptible d'être déplacé axialement, dans l'élément de guidage du fourreau (108), par le mécanisme électrique de déplacement axial (AA).

2. Dispositif de vissage selon la revendication 1,
**caractérisé en ce qu'**
au moins l'un des deux mécanismes électriques - le mécanisme électrique d'entraînement en rotation (RA) et le mécanisme électrique de déplacement axial (AA) - comprend un servomoteur à courant alternatif (84, 148) avec des moyens de commande de programmes.

3. Dispositif de vissage selon l'une des revendications 1 et 2,
**caractérisé en ce que**
la masse de l'outil de vissage (40) et des moyens de couplage axial (GAV) sollicités élastiquement dans la direction axiale est faible par rapport à la masse, axialement mobile, de l'ensemble de pilotage axial (AT).

4. Dispositif de vissage selon l'une des revendications 1 à 3,
**caractérisé en ce que**
le mécanisme électrique de déplacement axial (AA) comprend un moteur électrique de déplacement axial (148) qui est rotatif et **en ce qu'**un rotor (150) du moteur électrique de déplacement axial (148) rotatif se trouve en relation d'entraînement avec le fourreau (100), par l'intermédiaire d'un mécanisme de transformation du mouvement (BUG).

5. Dispositif de vissage selon la revendication 4,
**caractérisé en ce que**
le mécanisme de transformation du mouvement (BUG) est constitué par l'association d'une vis sans fin et d'une roue tangente (156, 158), présentes sur le rotor (150) du moteur électrique de déplacement axial (148) rotatif et par l'association d'une roue dentée et d'une crémaillère (164, 166) présentes sur le fourreau (100).

6. Dispositif de vissage selon l'une des revendications 1 à 5,
**caractérisé en ce que**
l'ensemble de pilotage d'outil rotatif (RT) comprend une unité interchangeable (EXU) qui incorpore l'outil de vissage (40) et les moyens de couplage axial (GAV) sollicités élastiquement dans la direction axiale.

7. Dispositif de vissage selon la revendication 6,
**caractérisé en ce que**
l'outil de vissage (40) est logé de façon détachable dans l'unité (EXU).

8. Dispositif de vissage selon l'une des revendications 1 à 7,
**caractérisé en ce que**
les moyens de couplage axial (GAV) sollicités élastiquement dans la direction axiale comprennent des moyens à ressort compressibles (138).

9. Dispositif de vissage selon la revendication 8,
**caractérisé en ce que**
les moyens à ressort compressibles (138) se trouvent sous précontrainte de compression axiale.

10. Dispositif de vissage selon l'une des revendications 1 à 9,
**caractérisé en ce que**
pour le déplacement axial de l'ensemble de pilotage axial (AT), provoqué par le mécanisme de déplacement axial (AA), on dispose d'un programme susceptible d'être prédéterminé, comprenant
a) un mouvement de rapprochement axial de l'ensemble de pilotage axial (AT), approximativement correspondant à un déplacement axial de l'outil de vissage (40) de la position de recul de l'outil (WRS) jusqu'à la position de mise en prise avec l'outil (WVVS) ;
b) - dans la mesure où cela est encore nécessaire - un autre mouvement de rapprochement axial de l'ensemble de pilotage axial (AT), correspondant approximativement à un passage de l'outil de vissage (40) de la position de mise en prise avec l'outil (WVVS) dans la position de mise en prise avec le composant à visser (WGES);
c) un déplacement axial de l'ensemble de pilotage axial (AT), correspondant à la phase de vissage entre les composants à visser (12, 14), et, par conséquent, correspondant approximativement au passage de l'outil de vissage (40) de la position de mise en prise avec le composant à visser (WGES) dans une position finale de vissage (WVES);
d) un mouvement de relut de l'ensemble de pilotage axial (AT), correspondant approximativement au passage de l'outil de vissage (40) de la position finale de vissage (WVES) à la position de recul (WRS) de l'outil de vissage (40).

11. Dispositif de vissage selon l'une des revendications 1 à 9,
**caractérisé en ce que**
pour le déplacement axial de l'ensemble de pilotage axial (AT), provoqué par le mécanisme de déplacement axial (AA), on dispose d'un programme susceptible d'être prédéterminé, comprenant
a) un mouvement de rapprochement axial de l'ensemble de pilotage axial (AT), correspondant approximativement à un déplacement axial de l'outil de vissage (40) de la position de recul de l'outil (WRS) jusqu'à la position de mise en prise avec l'outil (WVVS) ;
b) - dans la mesure où cela est encore nécessaire - un autre mouvement de rapprochement axial de l'ensemble de pilotage axial (AT), correspondant approximativement à un passage de l'outil de vissage (40) de la position de mise en prise avec l'outil (WVVS) dans la position de mise en prise avec le composant à visser (WGES);
c) un autre mouvement de rapprochement axial de l'ensemble de pilotage axial (AT), une fois que l'outil de vissage (40) a atteint la position de mise en prise avec le composent à visser (WGES), cet autre mouvement de rapprochement correspondant au moins au déplacement axial de l'outil de vissage (40) pendant la phase de vissage des composants à visser (12, 14), ce mouvement de rapprochement axial supplémentaire servant à précontraindre les moyens de couplage axial (GAV) sollicités élastiquement dans la direction axiale ou, s'ils sont déjà précontraints, à les précontraindre de façon supplémentaire,
d) une quasi immobilisation de l'ensemble de pilotage axial (AT) au cours de la phase de vissage et
e) un mouvement de recul de l'ensemble de pilotage axial (AT) correspondant approximativement à la somme des mouvements axiaux de rapprochement des étapes a), c) et le cas échéant b).

12. Dispositif de vissage selon l'une des revendications 1 à 10,
**caractérisé en ce que**
pour le déplacement axial de l'ensemble de pilotage axial (AT), provoqué par le mécanisme de déplacement axial (AA), on dispose d'un programme susceptible d'être prédéterminé, dans lequel la vitesse de déplacement axial de l'ensemble de pilotage axial (AT), pendant au moins une partie du mouvement de rapprochement de l'ensemble de pilotage axial (AT) qui correspond approximativement au passage de l'outil de vissage (40) de la position de recul d'outil (WRS) dans la position de mise en prise avec l'outil (WVVS), et/ou la vitesse de déplacement axial de l'ensemble de pilotage axial (AT), pendant au moins une partie du mouvement de rapprochement de l'ensemble de pilotage axial (AT), qui correspond approximativement au passage de l'outil de vissage (40) de la position de mise en prise avec l'outil (WVVS) à la position de mise en prise avec le composant à visser (WGES), est supérieure à la vitesse de déplacement axial de l'ensemble de pilotage axial (AT) pendant la phase de vissage.

13. Dispositif de vissage selon l'une des revendications 1 à 12,
**caractérisé en ce que**
pour le déplacement axial de l'ensemble de pilotage axial (AT), provoqué par le mécanisme de déplacement axial (AA), on dispose d'un programme susceptible d'être prédéterminé, dans lequel la vitesse de rapprochement axial de l'ensemble de pilotage axial (AT), au cours d'une phase finale de rapprochement partiel de l'outil de vissage (40) qui vient se placer dans la position de mise en prise avec l'outil (WVVS) et/ou au cours d'une phase finale de rapprochement partiel de l'outil de vissage (40) qui vient se placer dans la position de mise en prise avec le composant à visser (WGES), est inférieure à la vitesse de déplacement axial constatée avant le début de cette phase finale de rapprochement partiel.

14. Dispositif de vissage selon l'une des revendications 1 à 13,
**caractérisé en ce que**
pour le déplacement axial de l'ensemble de pilotage axial (AT), provoqué par le mécanisme de déplacement axial (AA), et pour le mouvement rotatif de l'ensemble rotatif de pilotage de l'outil (RT), on dispose d'un programme, dans lequel la vitesse de rotation de l'ensemble rotatif de pilotage de l'outil (RT), au cours d'une phase finale de rapprochement partiel de l'outil de vissage (40) qui vient se placer dans la position de mise en prise avec l'outil (WVVS) et/ou dans la position de mise en prise avec le composant à visser (WGES), est inférieurs à la vitesse de rotation constatée lors de la phase de vissage.

15. Dispositif de vissage selon l'une des revendications 1 à 14,
**caractérisé en ce que**
pour le mouvement rotatif de l'ensemble rotatif de pilotage de l'outil (RT), on dispose d'un programme permettant d'approcher d'un angle de rotation de référence et, le cas échéant, de n'importe quel écart angulaire par rapport à cet angle de rotation de référence.

16. Dispositif de vissage selon l'une des revendications 1 à 15,
**caractérisé en ce que**
les moyens de couplage axial (GAV) sollicités élastiquement dans la direction axiale se trouvent constamment sous une précontrainte telle qu'au cours d'une déformation axiale des moyens de couplage axial (GAV) sollicités élastiquement dans la direction axiale, qui intervient en fonctionnement, la force axiale exercée par ceux-ci reste approximativement constante.

17. Dispositif de vissage selon l'une des revendications 1 à 16,
**caractérisé en ce qu'**
un moteur électrique de déplacement axial (148), rotatif, du mécanisme électrique de déplacement axial (AA), et un moteur électrique rotatif d'entraînement en rotation (84) du mélanisme électrique d'entraînement en rotation (RA) sont montés sur des axes parallèles et parallèlement à l'axe de vissage (VA).

18. Dispositif de vissage selon la revendication 17,
**caractérisé en ce que**
le moteur électrique de déplacement axial (148) et le moteur électrique d'entraînement en rotation (84) sont fixés sur un ensemble de commande (80), rigide en fonctionnement, qui est susceptible d'être monté, si cela est souhaité, sur un support (30), par exemple d'une machine principale (10).

19. Dispositif de vissage selon la revendication 18,
**caractérisé en ce que**
les axes de rotation des deux moteurs électriques (148, 84), de l'ensemble de moteurs, sont approximativement rapprochés selon un écart qui est le plus faible possible.

20. Dispositif de vissage selon l'une des revendications 1 à 19,
**caractérisé en ce qu'**
il est conçu pour traiter des deuxièmes composants à visser (12) qui ne permettent une mise en prise et un entraînement en rotation, suite à un brusque déplacement axial de l'outil de vissage (40), que lorsque l'outil de vissage (40) se trouve dans une orientation angulaire relative prédéterminée par rapport au deuxième composant à visser (12) en question, et **en ce que** ce déplacement axial brusque de l'outil de vissage (40) est possible lorsqu'une précontrainte appliquée aux moyens de couplage axial (GAV), sollicités élastiquement dans la direction axiale, est supprimée.

21. Dispositif de vissage selon l'une des revendications 1 à 20,
**caractérisé en ce qu'**
il est monté sur une machine principale (10), en particulier une machine de montage (10), des moyens de stockage (18) destinés à des premiers composants (14) à visser les uns après les autres, étant susceptibles d'être amenés, par un dispositif d'entraînement pas à pas (38), à avancer par rapport au dispositif de vissage (24).

22. Dispositif de vissage selon l'une des revendications 1 à 21,
**caractérisé en ce qu'**
au dispositif de vissage (24) est associé un dispositif d'amenée (34, 32, 52) destiné aux deuxièmes composants à visser (12) devant être traités les uns après les autres.

23. Dispositif de vissage selon la revendication 22,
**caractérisé en ce que**
le dispositif d'amenée (34, 32, 52) qui est destiné aux deuxièmes composants à visser (12) comprend une trajectoire finale d'amenée (ZW1), adjacente à la position de préparation au vissage (VA), qui se trouve dans un plan qui est sensiblement orthogonal par rapport à l'axe de vissage (VA).

24. Dispositif de vissage selon la revendication 23,
**caractérisé en ce que**
le dispositif d'amenée (34, 32, 52), dans la trajectoire finale d'amenée (ZW1), comprend un support tournant (52) qui est susceptible d'être avancé, en tournant autour d'un axe de rotation (54) sensiblement parallèle à l'axe de vissage (VA), et qui comprend une pluralité de moyens de positionnement (56) destinés à des deuxièmes composants de vissage (12), ces moyens de positionnement (56), du fait de l'avance du support tournant (52), étant susceptibles d'être alignés, les uns après les autres, avec l'axe de vissage (VA).

25. Dispositif de vissage selon la revendication 24,
**caractérisé en ce que** le support tournant (52) est conformé en plateau tournant (52).

26. Dispositif de vissage selon l'une des revendications 1 à 25,
**caractérisé en ce que**
les moyens de positionnement (56) destinés à positionner les deuxièmes composants à visser (12) présentent des passages (66) s'étendant dans la direction de l'axe de vissage (VA) qui opposent une résistance définie à la pénétration par les deuxièmes moyens de vissage.

27. Dispositif de vissage selon la revendication 26,
**caractérisé en ce que**
les passages (66) sont délimités, au moins sur une partie de ces passages (66), par des mâchoires empêchant la pénétration, élastiquement précontraintes dans une direction radiale par rapport à l'axe de vissage (VA), qui sont susceptibles d'être déviées, du fait d'un mouvement de rapprochement axial, provoqué par l'outil de vissage (40), du deuxième composant à visser (12) vers le premier composant à visser (14).

28. Dispositif de vissage selon l'une des revendications 22 à 27,
**caractérisé en ce que**
le dispositif d'amenée (34, 32, 52) destiné au deuxième composant à visser (12), au moins dans une trajectoire d'amenée finale (ZW1) proche de l'axe de vissage (VA), est susceptible d'être entraîné par au moins l'un des dispositifs d'entraînement électriques - le mécanisme électrique d'entraînement en rotation (RA) ou/et le mécanisme électrique de déplacement axial (AA).

29. Dispositif de vissage selon l'une des revendications 22 à 28,
**caractérisé en ce qu'**
au moins un composant (52) du dispositif d'amenée (34, 32, 52) qui est proche de l'axe de vissage (VA) est susceptible d'être couplé momentanément avec le mécanisme électrique d'entraînement en rotation (RA) de l'ensemble rotatif de pilotage de l'outil (RT).

30. Dispositif de vissage selon la revendication 29,
**caractérisé en ce que**
le composant (52) du dispositif d'amenée (34, 32, 52) qui est proche de l'axe de vissage (VA) est susceptible d'être couplé avec le mécanisme électrique d'entraînement en rotation (RA) de l'ensemble rotatif de pilotage de l'outil (RT) lorsque l'ensemble rotatif de pilotage de l'outil (RT) n'est pas en train de visser les composants (12, 14).

31. Dispositif de vissage selon la revendication 29 ou 30,
**caractérisé en ce que**
le composant (52) du dispositif d'amenée (34, 32, 52) qui est proche de l'axe de vissage (VA) est susceptible d'être couplé avec le mécanisme électrique d'entraînement en rotation (RA), ou désaccouplé de celui-ci, par l'intermédiaire d'un dispositif de couplage (174, 176) qui peut être actionné par le mécanisme électrique de déplacement axial (AA).

32. Dispositif de vissage selon la revendication 31,
**caractérisé en ce que**
l'ensemble rotatif de pilotage d'outil (RT) comprend une première roue d'embrayage (176) qui, par un mouvement axial relatif, est susceptible d'être mise en prise ou dégagée d'une deuxième roue d'embrayage (174), et **en ce que** la première roue d'embrayage (176) est reliée à l'ensemble de pilotage axial (AT) pour effectuer un déplacement axial commun, et **en ce que** la deuxième roue d'embrayage (174) se trouve en relation d'entraînement avec le composant (52) du dispositif d'amenée (34, 32, 52) qui est proche de l'axe de vissage.

33. Dispositif de vissage selon la revendication 32,
**caractérisé en ce que**
la première roue d'embrayage (176) est accouplée avec la deuxième roue d'embrayage (174) lorsque l'ensemble de pilotage axial (AT) se trouve approximativement dans une position qui correspond à la position de recul d'outil (WRS), **en ce qu'**elle peut être désaccouplée lorsque l'ensemble de pilotage axial (AT) exécute un mouvement de rapprochement axial correspondant au déplacement axial de l'outil de vissage (40) qui passe de la position de recul d'outil (WRS) dans la position de mise en prise avec l'outil (WVVS), et **en ce qu'**elle peut à nouveau être accouplée lorsque l'ensemble de pilotage axial (AT) exécute un déplacement correspondant au déplacement de l'outil de vissage (40) lorsqu'il passe d'une position finale de vissage (WVES) dans une position de recul d'outil (WRS).

34. Dispositif de vissage selon l'une des revendications 29 à 33,
**caractérisé en ce que**,
pour préparer le couplage du composant (52) du dispositif d'amenée (34, 32, 52) qui est proche de l'axe de vissage (VA), sur l'ensemble rotatif de pilotage d'outil (RT), ce dernier est susceptible d'être placé dans une position angulaire prédéterminée.

35. Dispositif de vissage selon l'une des revendications 23 à 34,
**caractérisé en ce que**
le dispositif d'amenés (34, 32, 52) comprend une trajectoire d'amenée (ZW2) plus éloignée de l'axe de vissage (VA) qui fait suite, dans une position de transfert (50), à la trajectoire d'amenée finale (ZW1) qui est proche de l'axe de vissage (VA).

36. Dispositif de vissage selon la revendication 35,
**caractérisé en ce que**
la trajectoire d'amenée (ZW2) plus éloignée de l'axe de vissage (VA) présente un canal d'amenée (32) destiné aux deuxièmes composants à visser (12).

37. Dispositif de vissage selon la revendication 36,
**caractérisé en ce qu'**
une extrémité du canal d'amenée (32), dans une position de transfert (50), se termine par un moyen de positionnement (56) d'un composant (52) du dispositif d'amenée (34, 32, 52) qul est proche de l'axe de vissage (VA), et **en ce qu'**une majorité de moyens de positionnement (56) sont susceptibles d'être placés les uns derrière les autres dans la position de transfert (50).

38. Dispositif de vissage selon l'une des revendications 22 à 37,
**caractérisé en ce qu'**
un dispositif d'observation (178, 180) destiné aux deuxièmes composants à visser (12) acheminés par le dispositif d'amenée (34, 32, 52) est placé dans la zone du dispositif d'amenée (34, 32, 52).

39. Dispositif de vissage selon la revendication 38,
**caractérisé en ce que**
le dispositif d'observation (178, 180) est placé sur une trajectoire d'amenée (ZW1) proche de l'axe de vissage (VA).

40. Dispositif de vissage selon la revendication 39,
**caractérisé en ce que**
le dispositif d'observation (178, 180) est monté de façon stationnaire à un point d'observation situé à un poste d'arrêt momentané du deuxième composant à visser (12).
